# FASCICULE DE BREVET EUROPEEN

(11) **EP 0 533 905 B1**
(45) Date de publication et mention de la délivrance du brevet: **30.09.1998**
(21) Numéro de dépôt: 92910065.9
(22) Date de dépôt: 14.04.1992
(51) Int. Cl.: G06F 13/366

(54) **CIRCUIT INTEGRE ARBITREUR DE BUS MCA ET UTILISATIONS D'UN TEL CIRCUIT**
INTEGRIERTER SCHALTKREIS FÜR ARBITRIERUNG EINES MCA-BUSSES UND VERWENDUNG EINES SOLCHEN SCHALTKREISES
MCA BUS ARBITRATOR INTEGRATED CIRCUIT AND USE THEREOF

(30) Priorité: 15.04.1991 FR 9104597
(43) Date de publication de la demande: 31.03.1993
(73) Titulaire: BULL S.A., 78430 Louveciennes (FR)
(72) Inventeur: WOZNIAK, Yannick, F-75019 Paris (FR)
(74) Mandataire: Debay, Yves
(86) Numéro de dépôt international: FR9200333
(87) Numéro de publication internationale: WO9218933

(56) Documents cités:
- IBM TECHNICAL DISCLOSURE BULLETIN vol. 27, no. 4A, Septembre 1984, NEW YORK, USA pages 2216 - 2218; A. COUDER ET AL: 'Dynamic priority manager under application program control'
- IBM TECHNICAL DISCOSURE BULLETIN vol. 26, no. 6, Novembre 1983, NEW YORK, USA pages 2817 - 2819; D.A.STOCKWELL: 'Serial link communication module for local work station attachments'

## Description

La présente invention concerne un circuit intégré arbitreur de bus MCA permettant d'effectuer l'interface entre un bus MCA et les circuits logiques d'une carte sur laquelle différentes fonctions auront été incrémentées.

Il est connu par le brevet américain 4 991 085 un circuit intégré d'interface de bus comprenant une pile de registres de sélection d'options programmables P.O.S. avec une logique de commande de tampons de données externes et un circuit de commande d'arbitrage du bus, ainsi qu'un circuit de sélection du mode de fonctionnement entre un fonctionnement permettant l'utilisation des registres P.O.S. en externe ou en interne pour permettre une relocalisation des adresses mémoires.

Ce document ne permet pas en fonction du registre P.O.S. de modifier le fonctionnement interne des circuits d'arbitrage du bus, des circuits de décodage, et de commande.

Un premier but de l'invention est donc de proposer un circuit intégré arbitreur de bus permettant à partir de la sélection d'un mode de fonctionnement parmi plusieurs de modifier d'une part, le fonctionnement des circuits constitutifs du circuit arbitreur de bus, et d'autre part, la signification du contenu des registres de sélection d'options programmables, et des broches d'entrées-sorties des circuits du circuit arbitreur de bus, la mise en oeuvre de plusieurs modes de fonctionnement de ce circuit intégré.

Ce but est atteint par le fait que le circuit intégré arbitreur de bus comprenant un circuit logique d'arbitrage de bus (104), un circuit logique de commande (103) couplé audit circuit de logique d'arbitrage de bus pour délivrer des signaux de commande pour des circuits susceptibles d'être associés à ce circuit arbitreur de bus, un circuit de décodage (106) ayant une pluralité de registres de sélection d'options programmables (105), et un circuit logique de décodage du mode de fonctionnement (108) décodant un signal reçu pour déterminer un mode de fonctionnement du circuit d'arbitrage de bus parmi une pluralité de modes de fonctionnement caractérisé en ce que ledit circuit de décodage (108) du mode de fonctionnement étant couplé audit circuit d'arbitrage de bus, audit circuit logique de commande et audit circuit de décodage, le circuit de décodage du mode fonctionnement commande en fonction du mode de fonctionnement sélectionné le fonctionnement dudit circuit logique d'arbitrage de bus, dudit circuit logique de commande et dudit circuit de décodage, pour interpréter le contenu de la dite pluralité de registres de sélection d'options programmables et modifier l'affectation des broches de connexion du circuit arbitreur de bus et leur utilisation par ledit circuit d'arbitrage de bus, ledit circuit logique de commande et ledit circuit de décodage.

Selon une autre caractéristique, deux de la dite pluralité des registres de sélection d'options programmables définissent une première adresse (mode 8) du champ d'entrée-sortie du coupleur de fonctionnement (mode 0, 1 et 3) une seconde adresse (mode 6) du champ d'entrée-sortie du coupleur dans un second mode prédéterminé de fonctionnement (mode 2).

Selon une autre caractéristique, un troisième registre définit dans le cas du mode 0, 1 et 3, une taille d'un segment d'extension d'un système d'entrée-sortie, et le numéro du segment de mémoire morte du système d'entrée-sortie ;
Une taille du champ d'entrée-sortie du coupleur ;
Le numéro de segments de mémoire morte ROM ;
Un signal de validation de la mémoire vive RAM ;
Un signal de validation des entrées-sorties ;
Un signal de validation de la carte.
Selon une autre caractéristique, dans le mode de fonctionnement 0, un des registres de la pluralité des registres de sélection d'options programmables définit la taille des rafales d'un mode d'accès direct mémoire ;
Un signal de validation de l'arbitrage local ;
Un signal d'activation du mode équité et un niveau de priorité du mode d'accès direct mémoire.

Selon une autre caractéristique, dans le mode de fonctionnement 2, un registre de la pluralité des registres de sélection d'options programmables définit une taille de la fenêtre mémoire, une adresse d'un champ mémoire.

Selon une autre caractéristique, dans le mode de fonctionnement 1 un registre de la pluralité des registres de sélection d'options programmables définit la taille de la fenêtre de mémoire vive RAM :
- un numéro du segment RAM en mode fenêtre ;
- une sélection d'une interruption parmi quatre.

Selon une autre caractéristique, dans le mode de fonctionnement 3, un registre de la pluralité des registres de sélection d'options programmables définit un premier niveau de priorité du mode d'accès direct mémoire et, un second niveau de priorité du mode d'accès direct mémoire.

Selon une autre caractéristique, dans les modes de fonctionnement 0 et 3, par le circuit de commande (105) un signal (LPREEMPT) de demande d'initialisation d'un canal de bus par une procédure d'arbitrage, par le circuit d'arbitrage (104) un signal (ARBGNT) indiquant une procédure d'arbitrage en cours, par le circuit de décodage (106) un signal (DRQO) indiquant une requête de canal DMA présentée par le circuit au bus des signaux (ARB0-3) définissant les niveaux de priorité d'arbitrage de bus, et un signal (DACK0) indiquant au bus MCA couplé audit circuit arbitreur de bus un cycle d'accès direct mémoire consécutif à une demande effectuée par le signal (DRQ0) de requête de canal (DMA).

Selon une autre caractéristique, le circuit de décodage 106 des registres de sélection d'option programmable POS délivre dans les modes de fonctionnement 0 et 3, un signal (LCDEN) de validation d'une carte sur laquelle le circuit de codage est implanté, et un signal (LCSPOS) de sélection des registres POS.

Selon une autre caractéristique, dans les modes de fonctionnements 1 et 3, le circuit de décodage (106) des registres de sélection d'option programmable POS délivrent des signaux (OEID0 et OEID1), de validation des registres contenant l'identificateur d'une carte sur laquelle ledit circuit arbitreur est implanté.

Selon une autre caractéristique, il fournit dans les modes de fonctionnement 1 et 2, par le circuit d'arbitrage (104) des signaux [IT(0-3)] de détermination du niveau d'interruption, par le circuit de commande (105) un signal (LMEMRD) de commande de lecture de mémoire, un signal (LMEMWR) de commande d'écriture de mémoire, et par le circuit de décodage (106) un signal (LCSRAM) de sélection de la mémoire vive RAM.

Selon une autre caractéristique, il fournit dans le mode de fonctionnement 2, par le circuit de décodage (106) un signal (CHCK) d'indication en sortie de l'apparition d'une erreur grave, par le signal d'arbitrage (104) un signal (ICHCK) d'indication en entrée de l'apparition d'une erreur grave, un signal (INT) d'indication de l'apparition d'une interruption, un signal WS(0-1) d'indication de la taille de la mémoire vive utilisée en association avec le circuit arbitreur sur une carte, et un signal (STAT) d'indication de la présence d'un status erreur.

Selon une autre caractéristique, il délivre en fonctionnement en mode 0 un signal (TC) d'interruption d'un échange DMA en rafale par le circuit d'arbitrage de bus (104), et un signal (BURST) d'échange DMA en rafale par le circuit de commande (105).

Selon une autre caractéristique, il délivre dans le fonctionnement en mode 3 un signal (DRQ1) indiquant une requête de canal DMA présentée par le circuit d'arbitrage (104) au bus, un signal (DACK1) par le circuit de commande (105) indiquant au bus MCA couplé au circuit arbitreur de bus un cycle d'accès direct mémoire consécutif a une demande effectuée par le signal (DRQ1) de requête de canal DMA.

Un autre but de l'invention est de proposer l'utilisation de ce circuit intégré arbitreur de bus dans différentes applications.

Selon cet autre but, ce circuit est utilisé dans une carte LAN comportant un circuit d'interface (802) connecté, d'une part pour les signaux de contrôle avec le circuit arbitreur (102), et d'autre part à un bus d'adresse formé des 15 premières lignes d'un bus de 24 lignes, et des registres tampons (812) commandés par un signal (LADL) de verrouillage de décodage d'adresse provenant du circuit arbitreur, et enfin à un bus de donnée 8 bits branché par un registre tampon (811) commandé par des signaux (DIR), d'indication du sens de transfert (LDEN) et de validation de données de poids faible, et une mémoire EPROM (806) branché entre le bus de données 8 bits (841) et le bus d'adresse (817) et sélectionnée par le signal LCSROM.

selon une autre application, ce circuit est utilisé dans une carte LAN comportant un circuit d'interface (802) connecté, d'une part pour les signaux de contrôle avec le circuit arbitreur (102), et d'autre part à un bus d'adresse formé des 15 premières lignes d'un bus de 24 lignes, et des registres tampons (812) commandés par un signal (LADL) de verrouillage de décodage d'adresse provenant du circuit arbitreur, et enfin à un bus de donnée 8 bits branché par un registre tampon (811) commandé par des signaux (DIR), d'indication du sens de transfert (LDEN) et de validation de données de poids faible, et une mémoire EPROM (806) branché entre le bus de données 8 bits (841) et le bus d'adresse (817) et sélectionnée par le signal DIR, LDEN.

Selon un autre but, ce circuit est utilisé dans une carte ESDI.

D'autres caractéristiques et avantages de la présente invention apparaîtront plus clairement à la lecture de la description ci-après faite en référence aux dessins annexés dans lesquels :
- la figure 1 représente le schéma fonctionnel du circuit intégré ;
- les figures 2 à 5 représentent les informations contenues dans les registres de sélection d'option programmable (POS) selon le mode de fonctionnement du circuit ;
- La figure 6A représente un schéma fonctionnel plus détaillé de la logique de décodage de la figure 1 ;
- Les figures 6B à 6G représentent les schémas de réalisation de la logique de décodage de la figure 6A ;
- La figure 7A représente un schéma fonctionnel plus détaillé de la logique de commande de la figure 1 ;
- Les figures 7B à 7C représentent les schémas de réalisation de la logique de commande de la figure 7 ;
- La figure 8A représente un schéma fonctionnel plus détaillé de la logique d'arbitrage de la figure 1 ;
- Les figures 8B à 8E représentent les schémas de réalisation de logique d'arbitrage de la figure 8A ;
- La figure 9 représente le schéma de réalisation de la logique de décodage du mode de fonctionnement du circuit de la figure 1 ;
- La figure 10 représente le schéma de réalisation de la logique de signal "prêt" ;
- La figure 11 représente un exemple d'application du circuit intégré dans une carte ESDI ;
- La figure 12 représente un exemple d'application du circuit dans une carte LAN minimum ;
- La figure 13 représente un exemple d'application du circuit dans une carte LAN ;
- La figure 14 représente la séquence des signaux émis ou reçus par le circuit lors d'un cycle d'initialisation ;
- La figure 15 représente les signaux reçus ou échangés lors d'un cycle d'arbitrage d'accès direct de mémoire ;
- La figure 16 représente la séquence des signaux nécessaires à un cycle de lecture ;
- La figure 17 représente la séquence des signaux nécessaires à un cycle d'écriture ;
- La figure 18 représente la séquence des signaux nécessaires à un cycle d'accès mémoire direct simple selon le mode 3 ;
- La figure 19 représente les signaux nécessaires à un cycle d'accès direct mémoire en rafales selon le mode 0.

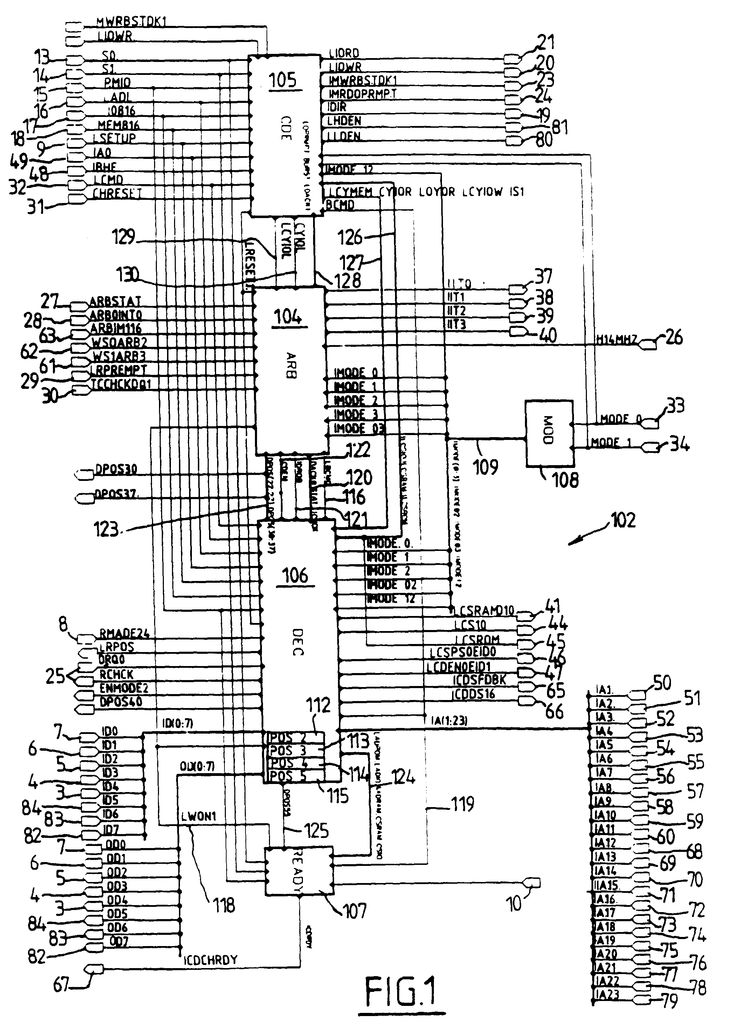

Le circuit arbitreur de bus MCA de la figure 1 comporte une logique de décodage (108) du mode de fonctionnement, qui reçoit, par les broches MODE0 (33) et MODE1 (34), les signaux qui vont permettre la sélection d'un mode de fonctionnement parmi les quatre possibles pour le circuit. Une pile de quatre registres POS2 (112), POS3 (113), POS4 (114), POS5 (115) contenu dans un circuit (106) d'option programmable POS permet aux autres éléments du circuit intégré, en fonction du mode de fonctionnement choisi, d'utiliser certaines informations de ces registres POS pour modifier en conséquence les signaux émis par les différents éléments de ce circuit intégré. Ces registres POS sont chargés par le bus de données (D0, D7) relié aux broches (3 à 7 et 82 à 84) du circuit (102), après transmission du signal de réinitialisation du canal (CHRESET) arrivant au bus MCA sur la broche (31).

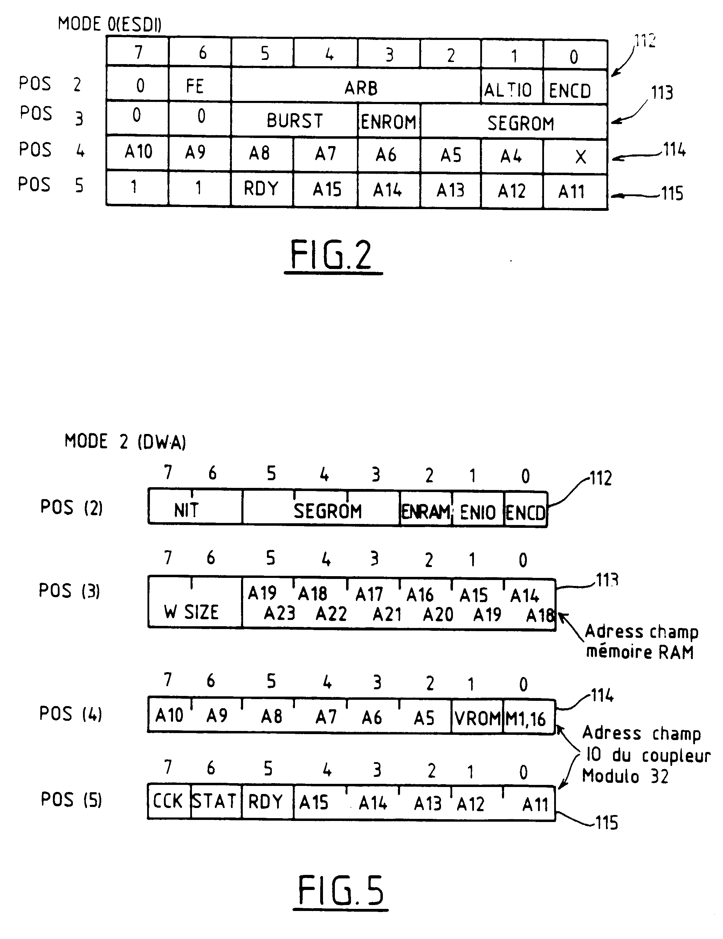

Le fonctionnement du circuit arbitreur dépend à la fois du décodage des entrées MODE0 (33) MODE1 (34) et du contenu des registres de sélection d'option programmable selon le mode associé. Ainsi, comme représenté à la figure 2, lorsque les broches (33, 34) sont connectées de façon à indiquer au circuit la programmation en mode0, les registres (112) à (115) ont des contenus représentés à la figure 2 qui ont les significations suivantes :

Le champ (ENCD) du bit 0 du registre (112) est le champ de validation de la carte (enable card) selon le code suivant :
. "1" = carte validée (enable)
. "0" = carte non validée (disable).

Le champ (ALTI0), représenté par le bit 1 du registre (112), définit une adresse alternée pour le champ entrée-sortie (IO) du circuit arbitreur et équivaut à la présence ou non du bit A3 d'adresse qui aurait pu être rangé dans le bit 0 du registre (114) non utilisé.
Le champ ARB, constitué par les bits 2 à 5 du registre (112), définit le niveau de priorité. Le bit 0 est le bit le moins significatif associé au niveau de priorité le plus bas, et le bit 3, le bit le plus significatif associé au niveau de priorité le plus haut.

Le champ FE, constitué par le bit 6 du registre (112) définit la validation du mode équité (fairness) selon le code
suivant :
0 = mode équité actif
1 = mode équité non actif
Le bit 7 du registre POS 112 n'est pas utilisé et est toujours au niveau bas en lecture.

Le champ SEGROM, constitué par les bits 0 à 2 du registre (113), définit le segment de mémoire morte ROM utilisé avec le circuit arbitreur selon le tableau suivant, pour des tailles de chaque tranche de 16 koctets :

| Bit5 | Bit4 | Eit3 | |
|---|---|---|---|
| 0 | 0 | 0 | C0000-C3FFF |
| 0 | 0 | 1 | C4000-C7FFF |
| 0 | 1 | 0 | C8000-CBFFF |
| 0 | 1 | 1 | CC000-CFFFF |
| 1 | 0 | 0 | D0000-D3FFF |
| 1 | 0 | 1 | D4000-D7FFF |
| 1 | 1 | 0 | D8000-DBFFF |
| 1 | 1 | 1 | DC000-DFFFF |

Le champ ENROM, constitué par le bit 3 du registre (113), valide la mémoire morte ROM utilisée avec le circuit arbitreur selon le tableau suivant :

| Bit6 | |
|---|---|
| 0 | ROM validée |
| 1 | ROM non validée |

Le champ BURST, constitué par les bits 4-5 du registre (113), définit la taille des rafales (BURST) de données échangées en mode DMA selon le tableau suivant :

| BIT5 | Bit4 | |
|---|---|---|
| 0 | 0 | accès single |
| 0 | 1 | 8 cycles |
| 1 | 0 | 16 cycles |
| 1 | 1 | 32 cycles |

Les bits 6 et 7 du registre POS 113 ne sont pas utilisés et sont toujours au niveau bas en lecture.

Les bits 1 à 7 du registre (114) définissent les bits d'adresse A4-A10 de position du champ d'entrée-sortie (IO) dans l'espace entrée-sortie (IO) du système, et les bits 0 à 4 du registre (115) définissent les bits d'adresse A11-A15 de la position du champ d'entrée-sortie dans l'espace entrée-sortie du système.

Le champ RDY, constitué par le bit 5 du registre (115), définit le type de gestion du signal canal prêt CDCHRDY selon le code suivant :
0 = cycle de 200ns
1 = cycle de 300ns ou > 300ns
On remarquera que l'accès ROM n'est pas sensible à ce bit et est fixé à 300ns.

Les bits 6 et 7 du registre (115) ne sont pas utilisés et sont toujours au niveau haut en lecture.

En ce qui concerne le model, les registres (112, 114, 115) sont définis comme pour le mode0, seul le registre (113) est modifié et le champ NIT constitué par les bits 0 et 1 de ce registre définit le numéro de ligne d'interruption du bus MCA utilisé selon le tableau ci-après :

| Bit0 | Bit1 | |
|---|---|---|
| 0 | 0 | IT0 |
| 0 | 1 | IT1 |
| 1 | 0 | IT2 |
| 1 | 1 | IT3 |

Le champ SEGRAM, constitué par les bits 3 et 5 du registre (113), définit le segment de mémoire vive RAM utilisé par le circuit arbitreur selon le tableau suivant, par des tailles de tranches de RAM de 16 Ko :

| Bit5 | Bit4 | Bit3 | |
|---|---|---|---|
| 0 | 0 | 0 | C0000-C3FFF |
| 0 | 0 | 1 | C4000-C7FFF |
| 0 | 1 | 0 | C8000-CBFFF |
| 0 | 1 | 1 | CC000-CFFFF |
| 1 | 0 | 0 | D0000-D3FFF |
| 1 | 0 | 1 | D4000-D7FFF |
| 1 | 1 | 0 | D8000-DBFFF |
| 1 | 1 | 1 | DC000-DFFFF |

Le champ (ERAM), constitué par les bits 6-7 du registre (113), définit la taille de la RAM associée au circuit arbitreur selon le tableau suivant :

| Bit7 | Bit6 | |
|---|---|---|
| 0 | 0 | pas de RAM |
| 0 | 1 | 16 Ko |
| 1 | 0 | 32 Ko |
| 1 | 1 | 64 Ko |

Dans le mode 2, le champ (ENCD), constitué par le bit 0 du registre (112) et le champ SEGROM, constitué par les bits 3 et 5 de ce même registre, ont les mêmes significations que pour le mode 0.

Le champ (ENIO), constitué par le bit 1 du registre (112), est le champ de validation des entrées-sorties (enable IO) selon le code suivant :
1 = entrée-sortie validée
0 = entrée-sortie non validée.

Le champ (ENRAM), constitué par le bit 2 du registre (112), est le champ de validation de la mémoire RAM selon le code suivant :
1 = mémoire RAM validée
0 = mémoire non validée.

Le champ (NIT), constitué par les bits 6-7 du registre (112), définit le numéro de ligne d'interruption utilisée selon le tableau suivant :

| Bit7 | Bit6 | |
|---|---|---|
| 0 | 0 | IT0 |
| 0 | 1 | IT1 |
| 1 | 0 | IT2 |
| 1 | 1 | IT3 |

Les bits 0 à 5 du registre (113) définissent la position du champ de la mémoire RAM en fonction de la valeur du champ (M116) constitué par le bit 0 du registre (114), selon le tableau suivant :
. Si M116 = 0, le champ RAM est définit par les bits d'adresse A14-A19 du bus d'adresse ;
. Si M116 = 1, le champ RAM est définit par les bits d'adresse A18-A23 du bus d'adresse.

Le champ (WSIZE), constitué par les bits 6-7 du registre (113), définit la taille du champ de la mémoire RAM en fonction de la valeur du champ M116 selon le tableau suivant :

| . Si M116 = 0 | Bit7 | Bit6 | |
|---|---|---|---|
| | 0 | 0 | X |
| | 0 | 1 | 16 Ko |
| | 1 | 0 | 32 Ko |
| | 1 | 1 | 64 Ko |

| . Si M116 = 1 | Bit7 | Bit6 | |
|---|---|---|---|
| | 0 | 0 | X |
| | 0 | 1 | 256 Ko |
| | 1 | 0 | 512 Ko |
| | 1 | 1 | 1 Mo |

Le champ (M116), constitué par le bit 0 du registre (114), définit la position du champ de mémoire RAM par rapport au premier Megaoctet, selon le tableau suivant :
M116 - 0 dans le 1er Mega
M116 = 1 au-dessus du 1er Mega dans la limite de 16 Mega.

Le champ (VROM), constitué par le bit 1 du registre (114), définit la validation de la mémoire ROM, selon le code suivant :
0 = dévalidation de la mémoire
1 = mémoire de 16 Ko validée.

Les bits 2 à 7 du registre (114) définissent, par les lignes d'adresse AS-A10 du bus MCA, la position du champ d'entrée-sortie dans l'espace entrée-sortie du système.

Les bits 0 à 3 du registre (115) définissent, par les lignes d'adresse A11-A14 du bus MCA, la position du champ d'entrée- sortie dans l'espace entrée-sortie du système.

Le champ (RDY) a la même définition que dans le mode0.

Le champ (STAT), constitué par le bit 6 du registre (115) définit la disponibilité de l'état (Status available) selon le code suivant :
0 = état présent
1 = pas d'état.

Le champ (CCK), constitué par le bit 7 du registre (115), définit l'indicateur de vérification de canal (channel check indicator), selon le code suivant :
0 = indicateur de vérification présent
1 = pas d'indicateur de vérification.

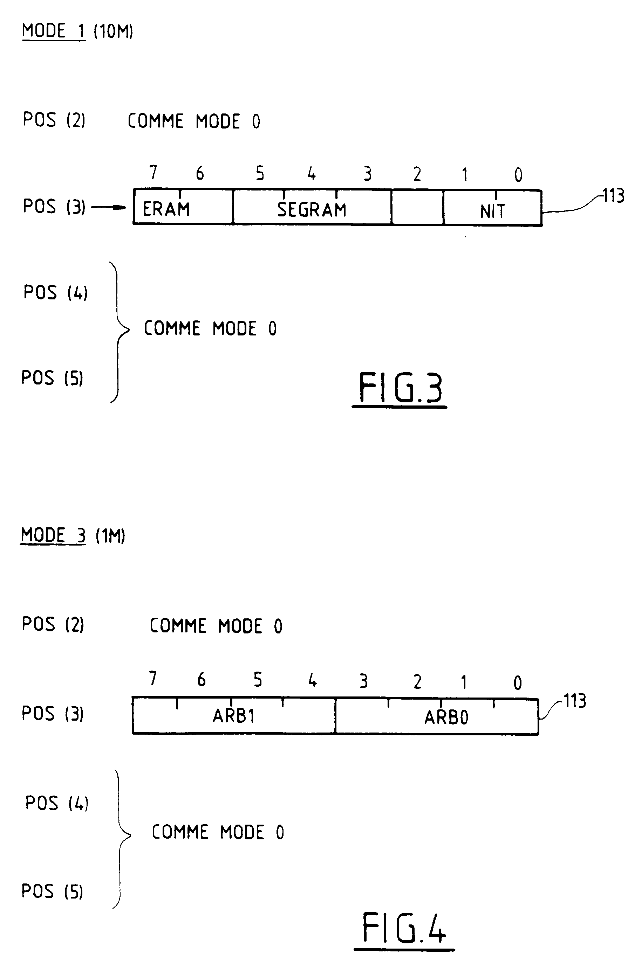

Enfin, en ce qui concerne le mode3, comme représenté à la figure 4, les registres (112, 114, 115) sont identiques à ceux du mode0, seul le registre (113) est modifié, et le champ (ARB0), constitué par les bits 0 à 3 de ce registre (113), définit le niveau de priorité parmi les quatre possible du canal 0, le bit 0 étant le moins significatif et le bit 3 le plus significatif.

Le champ (ARB1), constitué par les bits 4 à 7, définit le niveau de priorité du canal 1 du DMA, le bit 4 étant le moins significatif, le bit 7 le plus significatif.

Un circuit (106) permet sur réception du signal d'initialisation des registres POS (LS et UP) reçu sur la broche (9) et d'un signal de sélection envoyé sur le bus d'adresse d'émettre les signaux (LCPSOEID0) et (LCDENOEID1) sur les broches respectives (46, 47). La lettre "L", placée devant le nom d'un signal (par exemple LSETUP), indique que le signal SETUP est actif à l'état bas.

En mode 0 et 2, la sortie (46) est constituée par le signal (LCSPOS) qui indique, lorsque la sortie locale est active à l'état bas, la sélection des registres POS (110) à (117), le signal (LSETUP) étant verrouillé par le signal (LADL).

La sortie (47) est constituée par le signal (LCDEN) de validation de la carte sur laquelle est montée le circuit arbitreur.

En mode 1 et 3, la sortie (46) est constituée par le signal (OEID0) indiquant la validation en sortie de l'identificateur (ID0). Cette sortie active à l'état bas indique la lecture d'un registre (110) contenant l'identificateur (ID0).

La sortie (47) est constituée par le signal (OEID1) indiquant la validation en sortie de l'identificateur (ID1).

Le circuit (106) de décodage délivre également sur la broche (66), le signal (CDDS16) ; sur la broche (65), le signal (CDSFDBK) ; sur la broche (45), le signal (CSROM) ; sur la broche (44), le signal (LCSIO) en sortie ; sur la broche (41), le signal (CSRAM DKO) et le signal (CHCKDQO) sur la broche (25).

Ce circuit de décodage (106) reçoit en entrée, sur la broche (16), le signal (LADL) ; sur la broche (15), le signal (MIO); sur les broches (49 à 60) et (68 à 79), les 24 bits d'adresse (A0 - A23) ; sur la broche (8), le signal (MADE24) ; sur la broche (48), le signal (BHE).

Ce circuit reçoit également sur la broche (18), le signal (MEM816) ; sur la broche (17), le signal (I0816).

La signification et l'action des différents signaux est donnée ci-après dans la suite du texte et on verra, dans cette suite du texte, que certaines broches telles que par exemple (46, 47) émettent ou reçoivent des signaux (LCSP, OEIDO) de significations différentes suivant le mode de fonctionnement sélectionné par les broches (33, 34). Le circuit (107) d'élaboration du signal "prêt" délivré en interne sur la carte par l'arbitreur par la broche (10) le signal (IRDY) et en externe vers le bas MCA par la broche (67) le signal (CDCHRDY).

Ce circuit (107) reçoit par la liaison (118) le signal (LWON1) élaboré par le circuit arbitreur (104). Ce signal (LWON1) est également envoyé vers le circuit de décodage (106).

Le circuit (107) reçoit également par la ligne (124) les signaux (LADROM, LADIO, LADRAM, CSRAM, CSIO) provenant du circuit (106) et par la liaison (119) le signal (BCMD) provenant du circuit (106). Ce signal (BCMD) est également envoyé par la liaison (119) sur le circuit (105). Enfin, le circuit (107) reçoit par la liaison (125) le signal (DPOS55) qui est constitué par le 5ème bit du registre POS5 (115).

Le circuit (105) de commande reçoit en entrée sur la broche (32), le signal (LCMD) ; sur la broche (13), le signal (S0) ; sur la broche (14), le signal (S1), et émet en sortie sur la broche (21), le signal (LIORD) ; sur la broche (20), le signal (LIOWR) ; sur la broche (80), le signal (LLDEN) ; sur la broche (19), le signal (LHDEN) ; sur la broche (81), le signal (DIR).

Ce circuit (105) émet également en sortie le signal (LMWMSTDK1) sur la broche (23) ; le signal (LMRDOPREMPT) sur la broche (24).

Un circuit (104) d'arbitrage de bus reçoit en entrée le signal (ARB0INT0) sur la broche (28) ; le signal (LPREMPT) sur la broche (29) ; l'horloge de 14 MHz sur la broche (26).

Ce circuit (104) d'arbitrage émet en entrée ou en sortie, le signal (ARBSTAT) sur la broche (27), le signal (TCCHCKDQ1) sur la broche (30) ; le signal (WSOARB2) sur la broche (62) ; le signal (WS1ARB3) sur la broche (61) ; et le signal (ARE1M116) sur la broche (63).

Enfin, le circuit d'arbitrage (104) émet en sortie une des quatre d'interruption IT(0 à 3) disponibles sur les broches (37) à (40). Ce circuit (103) reçoit également par la ligne (109) les bits 6 et 7 (NIT) du registre POS (112) en Mode2.

Les broches (37 à 40) constituent également les sorties (0ARB0à3) du circuit d'arbitrage de bus (104).

Un bus de communication (109), passant par le circuit mode (108), fournit à l'ensemble des circuits de décodage (106), de commande (105), d'arbitrage (104), les signaux de mode qui permettent à ces circuits (106, 105, 104, 107) de sélectionner en fonction du mode choisi les informations provenant des registres POS utiles pour l'élaboration des signaux de sortie de chaque circuit (107, 106, 105, 104) correspondant au mode de fonctionnement sélectionné et à la programmation des registres POS.

Le circuit décodeur (106) fournit par la liaison (123) les bits 2 à 7 du registre POS2 (112) constitués par les signaux (DPOS 22 : 27) et les bits (0 à 7) du registre POS3 (113).

Le circuit décodeur (106) délivre par la liaison (122) le signal (CDEN), par la liaison (121) le signal (IDRQO) et par la liaison (116) le signal (LBCMD) au circuit d'arbitrage (104).

Le circuit d'arbitrage (104) émet par la liaison (120) vers le circuit décodeur (106) les signaux (DACKO, STAT, ICHCK) et par la liaison (128) vers le circuit commande (105) les signaux (DACK1, BURST LOPRMPT).

Le circuit arbitreur (104) reçoit du circuit de commande (105) par la liaison (129) le signal (LCYIOL) et par la liaison (130) le signal (CYIOL). Le circuit de commande délivre par la liaison (127) les signaux (LCYMEM, CYIOR, LCYIOR, LCYIOW, IS1), par la liaison (126) les signaux (ILCSI0, ILCSRAM, ILCSROM) au circuit de décodage (106) et par ia liaison (103) le signal (LRESET1) au circuit d'arbitrage (104) et au circuit de décodage (106).

La signification des signaux émis ou reçus par les différents circuits du circuit intégré est indiquée ci-après :

| **N° BROCHE** | **TYPE** | **SYMBOLE** | **DESCRIPTION** | | |
|---|---|---|---|---|---|
| 3-7 82-84 | Bidir | D4-D0 D7-D5 | Bus de données. Ces bits sont utilisés pour l'écriture ou la lecture des POS (112 à 115) pendant les cycles d'initialisation du circuit (setup). Ce sont des lignes bidirectionnelles 3 états. | | |
| 8 | Entrée | MADE24 | Indicateur d'adresse étendue Un niveau haut indique une adresse inférieure ou égale à 16 M. | | |
| 9 | Entrée | LSETUP | Cette ligne active à l'état bas indique la sélection du connecteur pour l'accès aux registres POS connectés à celui-ci. | | |
| 10 | Entrée | RDY | Signal "prêt" (ready) de bus local pour l'extension asynchrone du cycle MCA. L'état non prêt est l'état bas. Ce signal doit être généré de façon à ce que le signal du bus MCA CDHRDY n'excède pas 3µs. | | |
| 11-12 | | NC | Non connecté. | | |
| 13-14 | Entrée | S0 S1 | Bit d'état du bus MCA (Status bite MCA). Ces lignes indiquent le commencement du cycle, ainsi que sont type (lecture avec S1 au niveau, bas et S0 au niveau haut, écriture avec S0 au niveau bas et S0 au niveau haut ou réservé avec S0 et S1 aux mêmes niveaux. | | |
| 15 | Entrée | MIO | Cycle mémoire/Cycle entrée-sortie (Memory/Input Output). Ce signal permet la distinction entre un cycle mémoire et un cycle entrée-sortie (IO). Le type de cycle écriture ou lecture est défini en fonction des valeurs de S0 et S1. Ainsi si M/IO et S1 sont au niveau haut et S0 au niveau bas, on effectue un cycle d'écriture mémoire. Niveau haut : cycle mémoire Niveau bas : cycle E-S (IO) | | |
| 16 | Entrée | LADL | Verrou de décodage d'adresse (Address Decode Latch). Ce signal permet de verrouiller un décodage d'adresses ou de status sur son front montant, pour assurer le bon déroulement du cycle. | | |
| 17 | Entrée | I0816 | Entrée-sortie (IO) 8 ou 16 bits. Cette entrée détermine la largeur du bus donnée des entrées-sorties (IO), permettant ou non la génération des signaux CDDS16 et LHDEN pour les cycles d'entrée-sortie. Cette ligne est fixée par cablage et n'est pas une entrée dynamique. Niveau haut : 8 bits Niveau bas : 16 bits. | | |
| 18 | Entrée | MEM816 | Mémoire 8 ou 16 bits. Cette entrée détermine la largeur du bus data mémoire permettant ou non la génération des signaux CDDS16 et LHDEN pour les cycles mémoires. Cette ligne est fixée par cablage et n'est pas une entrée dynamique. Niveau haut : 8 bits Niveau bas : 16 bits. | | |
| 19 | Sortie | LHDEN | Validation des bits poids fort (High byte data enable). Cette sortie active au niveau bas doit être connectée à l'entrée de validation d'un circuit chip enable externe (245). Cette ligne est active lors d'accès entrée-sortie (IO), mémoire ou en mode DMA sur 16 bits correspondant aux champs d'adresses programmées dans les registres POS (112 à 115). | | |
| 20 | Sortie | LIOWR | Impulsion d'écriture entrée sortie (IO write strobe). Ce signal actif à l'état bas indique une écriture entrée-sortie (IO). Le décodage des status S0 S1 et de MIO est autorisé par le signal commande LCMD. | | |
| 21 | Sortie | LIORD | Impulsion de lecture entrée sortie (IO read strobe). Ce signal actif à l'état bas indique une lecture entrée-sortie (IO). Le décodage des status S0 S1 et de MIO est autorisé par le signal commande LCMD. | | |
| 22 | Sortie | LMWBSTDK1 | Mode0 : RAFALE, (BURST). Ce signal actif haut relié au bus MCA à travers une porte inverseuse collecteur ouvert (F38), indique le transfert d'un bloc de données. Cette ligne est active après une phase d'arbitrage gagnée, à la suite d'une demande DRQ pour autant que l'emplacement correspondant aux bits 6, 7 du registre POS (113) ne soit pas à zéro. Mode1 Mode2: LMEMWR, Impulsion d'écriture mémoire (memory write strobe). Ce signal actif à l'état bas indique une écriture mémoire. Le décodage des status S0 S1 et de MIO autorisé par le signal commande LCMD. Mode3 : LDACK1, Accusé de réception canal 1 (Acknowledge canal 1). Ce signal actif à l'état bas indique un cycle entrée-sortie (IO) en mode DMA, après une phase d'arbitrage gagnée à la suite d'une demande DRQ1. | | |
| 24 | Sortie | LMRDOPRMPT | Mode0 Mode3 : OPREMPT, Requête sur MCA. Ce signal actif haut relié au bus MCA à travers une porte inverseuse collecteur ouvert (F38), indique la requête du bus MCA à la suite d'une demande DRQ. Cette ligne devient inactive après une phase d'arbitrage gagnée. Model Mode2:LMEMRD, Impulsion lecture mémoire (memory read strobe). Ce signal actif à l'état bas indique une lecture mémoire. Le décodage des status S0 S1 et de MI0 est autorisé par le signal commande LCMD. | | |
| 25 | Entrée | CHCKDRQ0 | Mode0 Mode3: DRQ0, Requête de DMA en mode0 (DMA request canal 0). Cette entrée active à l'état haut indique la requête d'un canal DMA, et provoque la préemption du bus MCA. | | |
| | Sortie | CHCKDRQ0 | Mode2 : CHCK, Vérification de canal (Channel check). Cette sortie active à l'état haut relié au bus MCA à travers un collecteur ouvert inverseur indique l'apparition d'une erreur grave pouvant perturber le fonctionnement du système. Cette ligne devient inactive après l'écriture à 1 du bit 7 du POS 115. Mode1 : non utilisé. | | |
| 26 | Entrée | 014MHZ | Horloge à 14,318Mhz. Cette horloge est utilisée pour l'arbitrage interne des demandes DRQ0 DRQ1 dans le mode3. | | |
| 27 | Entrée | ARBSTAT | Mode0 mode3 : Arbitrage, ARB/GNT. Cette entrée au niveau haut indique une phase d'arbitrage pendant laquelle les niveaux de priorité en compétition sont présentés sur le bus MCA (ARB0-3). Lors du front descendant de ce signal, le bus MCA est accordé au plus prioritaire qui maintient son niveau ARB tant que ce signal est au niveau bas. Les autres compétiteurs ayant retiré leurs niveaux. Mode2 : STAT, Etat. Cette entrée locale signale la présence d'un status erreur. Ce signal actif à l'état haut active le bit 6 du POS 115 si une erreur est signalée par le signal (CHCK). Mode1 : non utilisé. | | |
| 28 | Entrée | ARBOINTO | Mode0 Mode3: ARB0 Numéro d'arbitrage. Ce signal du bus MCA indique le numéro de priorité et permet la détermination pendant la phase d'arbitrage (avec ARB1-3) du gagnant. Le signal ARBO et le bit le moins significatif. Mode1 Mode2:INTO Interruption Ce signal local actif à l'état haut indique l'apparition d'une interruption. | | |
| 29 | Entrée | LPREMPT | Mode0 Mode3: PREMPT, Requête sur bus MCA. Ce signal du bus MCA actif à l'état bas indique une requête sur le bus MCA. Mode1 Mode2: non utilisé. | | |
| 30 | Entrée | TCCHCKDQ1 | Mode0 : TC, Compte terminal (Terminal count). Ce signal du bus MCA actif à l'état bas indique la fin d'un échange en mode DMA. Cette entrée est utilisée pour interrompre le signal BURST. Mode1 : non utilisé. Mode2 : ICHCK, Vérification d'erreur. Ce signal local actif à l'état bas indique l'apparition d'une erreur grave. Cette entrée est utilisée pour générer le signal CHCK ainsi que le bit 7 du POS 105. Mode3 : DRQ1, Requête DMA sur canal 1 (DMA request canal 1) Cette entrée locale active à l'état haut indique la requête d'un canal DMA, et provoque la préemption du bus MCA. | | |
| 31 | Entrée | CHRESET | Réinitialisation du canal (Channel reset). Ce signal du bus MCA, actif à l'état haut, est utilisé à la mise sous tension pour initialiser le circuit. | | |
| 32 | Entrée | LCMD | Commande. Ce signal du bus MCA est actif à l'état bas. Cette entrée indique que les données sont valides sur le bus. Son front montant indique la fin du cycle. Ce signal est utilisé pour autoriser les commandes entrée-sortie (IO) et mémoire ainsi que les commandes buffers données. | | |
| 33-34 | Entrée | MODE0 MODE1 | Ces signaux locaux indiquent le mode de fonctionnement du circuit. | | |
| | | | Mode0 | Mode1 | |
| | | | 0 | 0 | Mode0 |
| | | | 1 | 0 | Mode1 |
| | | | 0 | 1 | Mode2 |
| | | | 1 | 1 | Mode3 |
| 35 | Entrée | TESTIN | Signal d'entrée test du circuit. Cette entrée doit être au niveau bas en opérationnel | | |
| 36 | Sortie | TESTOUT | Signal de sortie test du circuit. | | |
| 37-40 | Sortie | OARB0ITO OARB1IT1 OARB2IT2 OARB3IT3 | Mode0 Mode3 : 0ARB (0-3), Numéro d'arbitrage. Niveau de priorité d'arbitrage bus. Ces 4 bits sont reliés au bus MCA ARB à travers des collecteurs ouverts inverseurs (F38), et sont actifs lors d'une phase d'arbitrage suite à une requête du bus MCA. Ces signaux sont maintenus lors d'un arbitrage gagné et disparaissent dans le cas contraire. Mode1 Mode2 : IT(0-3) Numéro d'interruption. Lignes d'interruption. Ces 4 sorties sont reliées au bus MCA IRQ à travers des collecteurs ouverts inverseurs (F38). | | |
| | | | L'entrée INT est transmise au multiplexeur (103) qui la renvoie sur une des 4 sorties IT(0-3) suivant la configuration des bits 6 et 7 (NIT) du registre POS (112) en Mode2. Ces lignes sont actives au niveau haut. | | |
| 41 | Sortie | LCSRAMDK0 | Mode0 Mode3 : LDACK0, Acquittement canal 0 (Acknowledge canal 0). Cette sortie locale active à l'état bas indique un cycle entrée sortie (IO) en mode DMA après une phase d'arbitrage gagnée consécutive à une demande DRQ0 dans le Mode3. Cette sortie locale active à l'état bas indique un arbitrage gagné à la suite d'une demande DRQ0 dans le Model. Cette ligne devient inactive à l'arbitrage suivant. Mode1 Mode2 : LCSRAM Sélection de la RAM par le circuit (Chip select RAM). Cette sortie locale active à l'état bas indique la sélection du champ RAM programmé dans les bits 2 du registre POS 112 et 0 du registre 114 pour les mode 1 et 2, et d'une part le registre 113 en mode 2, ou d'autre part les bits 3 à 7 du registre 113 en mode 1. Adresses et status valides sont verrouillés par LCMD. | | |
| 44 | Sortie | LCSIO | Sélection des entrées sorties par le circuit (Chip select IO). Cette sortie locale active à l'état bas indique la sélection du champ entrée sortie (IO) programmé dans les registres POS, d'une part dont la taille en mode 0, 1, 3 est indiquée par les bits 1, 2 (IOA) du registre 112 et la position par le registre 114 et les bits 0-4 du registre 115, et d'autre part validée en mode 2 par le bit 1 du registre 112 et dont la position est indiquée par les bits 0-4 du registre 115 et 2-7 du registre 114. | | |
| 45 | Sortie | LCSROM | Sélection de la ROM par le circuit (Chip select ROM). Cette sortie locale active à l'état bas indique la sélection du champ ROM programmé dans les champs (SEG ROM) des bits (3-5) du registre 112 et des bits 6-7 (EROM) du registre 112 en mode 0, 1 et 3 ou du bit 1 (VROM) du registre 114 en mode 2. Adresses et status read valides sont verrouillés par LCMD. | | |
| 46 | Sortie | LCSPOEIDO | Mode0 Mode2: LCSPOS Sélection des registres POS. Cette sortie locale active à l'état bas indique la sélection des registres POS 110 à 117. Le signal LSETUP est verrouillé par LADL. Mode1 Mode3: OEIDO Validation de la sortie de l'identificateur (Ouput enable IDO). Cette sortie locale active à l'état bas indique la lecture du registre POS 110. | | |
| 47 | Sortie | LCDENOEID1 | Mode0 Mode2 : LCDEN Validation de la carte (Card enable). Cette sortie locale active à l'état bas indique que la carte est active (bit 0 POS 112). Mode1 Mode3: OEID1 Validation de la sortie de l'identificateur ID1 (Ouput enable ID1). Cette sortie locale active à l'état bas indique la lecture du registre POS 111. | | |
| 48 | Entrée | BHE | Validation de l'octet de poids fort (System Byte High Enable). Ce signal du bus MCA est utilisé pour valider l'octet de poids fort, lors d'accès sur un système 16 bits. | | |
| 49-60 68-79 | Entrée | A0-A11 A12-A23 | Adresses du bus MCA (Bus addresses MCA). Ces bits, dont A0 est le bit le moins significatif et A23 le plus significatif, sont utilisés pour le décodage des ressources mémoire et entréesortie (IO). | | |
| 61 | Entrée | WS1ARB3 | Mode0 Mode3: ARB3, Niveau d'arbitrage. Ce signal du bus MCA indique le niveau de priorité et permet la détermination du gagnant pendant la phase d'arbitrage (avec ARB0-ARB2). ARB3 est le bit le plus significatif. | | |
| | Sortie | WS1ARB3 | Mode2: WS1, Taille de la fenêtre mémoire. Cette sortie locale indique avec les bits WS0 et M116 la taille de la mémoire utilisée par la carte. Cette taille étant définie en mode 2 par les bits 6, 7 (WSIZE) du registre 113 et le bit 0 (M116) du registre 114. M116 = 0 : dans le 1er mega | | |
| | | | WS0 | WS1 | Taille |
| | | | 1 | 1 | 64 ko |
| | | | 0 | 1 | 32 ko |
| | | | 1 | 0 | 16 ko |
| | | | M116 = 1 : au-dessus de 1 méga | | |
| | | | WS0 | WS1 | Taille |
| | | | 1 | 1 | 1 mo |
| | | | 0 | 1 | 512 ko |
| | | | 1 | 0 | 256 ko |
| 62 | Entrée | WSOARB2 | Mode0 Model Mode3 : ARB2, Niveau d'arbitrage. Ce signal du bus MCA indique le niveau de priorité et permet la détermination du gagnant pendant la phase d'arbitrage (avec ARB0-1-3). | | |
| | Sortie | WSOARB2 | Mode2 : WS0 Taille de la fenêtre mémoire. Cette sortie locale indique avec les bits WS1 et M116 la taille de la mémoire utilisée par la carte. Voir tableau WS1ARB3. | | |
| 63 | Entrée | ARB1M116 | Mode0 Mode1 Mode3 : ARB1 Niveau d'arbitrage. Ce signal du bus MCA indique le niveau de priorité et permet la détermination du gagnant pendant la phase d'arbitrage (avec ARB0-2-3). | | |
| | Sortie | ARB1M116 | Mode2 : M116 Cette sortie locale indique, comme on l'a vu plus haut, la position de la mémoire utilisée dans l'espace mémoire du système. Voir tableau WS1ARB3. | | |
| 65 | Sortie | CDSFDBK | Retour carte sélectionnée (Card selected feedback). Cette sortie active à l'état haut reliée au bus MCA à travers un inverseur (F04), indique la sélection d'une zone mémoire ou entrée sortie (IO) utilisée par la carte. | | |
| 66 | Sortie | CDDS16 | Taille donnée carte 16 bits (Card Data Size 16). Cette sortie active à l'état haut relié au bus MCA à travers un inverseur (F04), indique la sélection d'une zone mémoire ou entrée sortie (IO) de 16 bits. | | |
| 67 | Sortie | CDCHRDY | Canal PRET (Channel Ready). Cette sortie reliée au bus MCA à travers un inverseur (F04), indique à l'état haut un état non prêt. Cette ligne peut être générée par la programmation du bit 5 du registre POS 115 et maintenue par l'entrée RDY. | | |
| 80 | Sortie | LLDEN | Validation donnée de poids faible (Low byte data enable) Cette sortie locale active au niveau bas indique l'accès au poids faible d'une ressource locale entrée-sortie (IO) ou mémoire. Cette ligne doit être connectée au chip enable d'un buffer externe (245). | | |
| 81 | Sortie | DIR | Direction. Cette sortie locale indique le sens des transferts données en cours. Un niveau bas indique une lecture, un niveau haut une écriture. Cette ligne doit être connectée à la direction d'un buffer externe (245). | | |
| 1 | 43 | Entrée | VDD | 5V | |
| 2 | 22 | Entrée | VSS | Masse | |
| 42 | 64 | | | | |

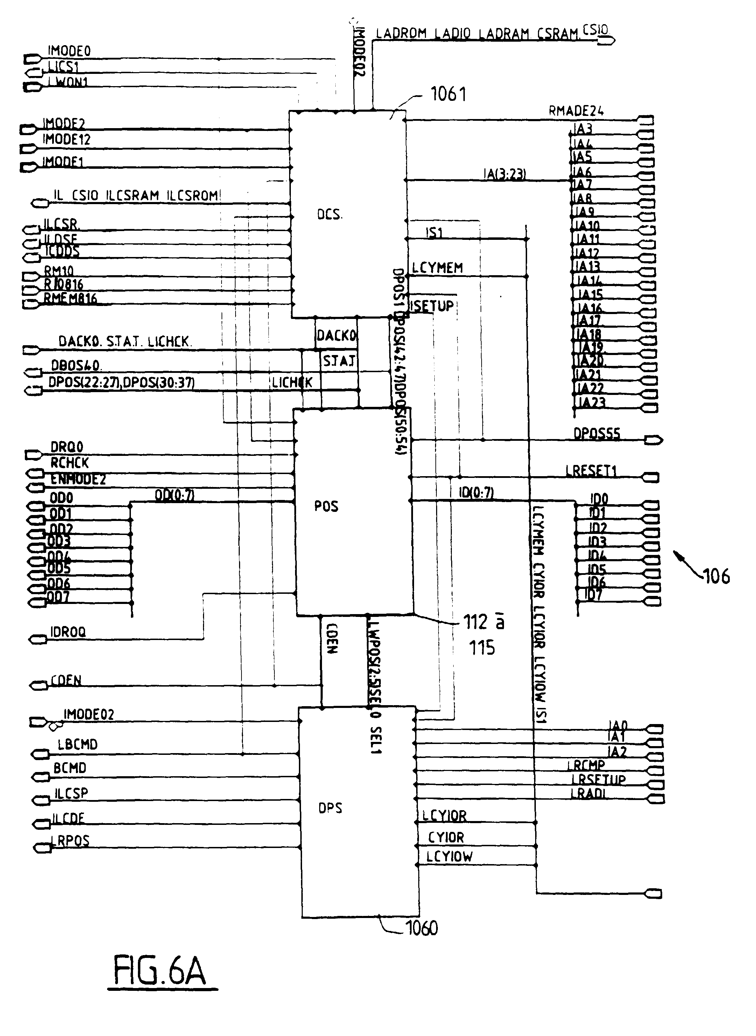

La figure 6A représente de façon plus détaillée les blocs logiques du circuit (106) décodeur qui est constitué principalement d'un bloc logique de registre POS 112 à 115, d'un bloc logique DPS (1060) de commande des registres POS et d'un bloc logique (1061) DCS de génération des signaux de sélection, soit des entrées-sorties, soit de la mémoire vive RAM, soit de la mémoire morte ROM en fonction des adresses présentées sur le bus d'adresses.

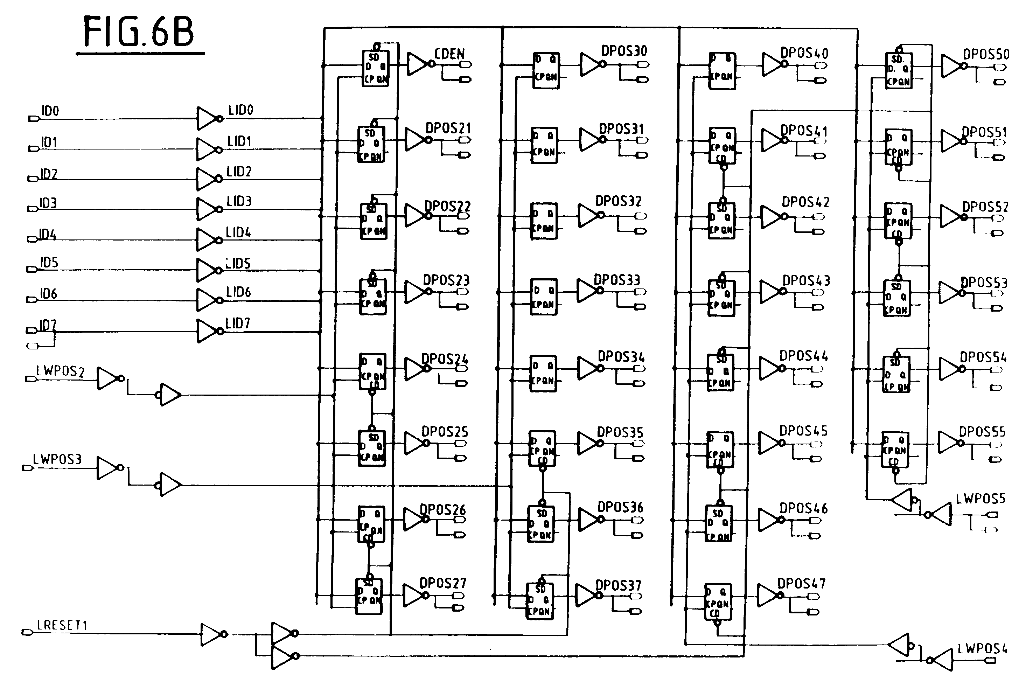

La figure 6B représente le schéma logique détaillé des registres POS constitué à partir de bascules dont les sorties DPOSXY indiquent par X le numéro, peuvent être chargées à partir du bus de données IDO-ID7 en synchronisme avec les signaux LWPOS2, LWPOS3, LWPOS4, LWPOSS sélectionnant en écriture ou en lecture chacun des registres.

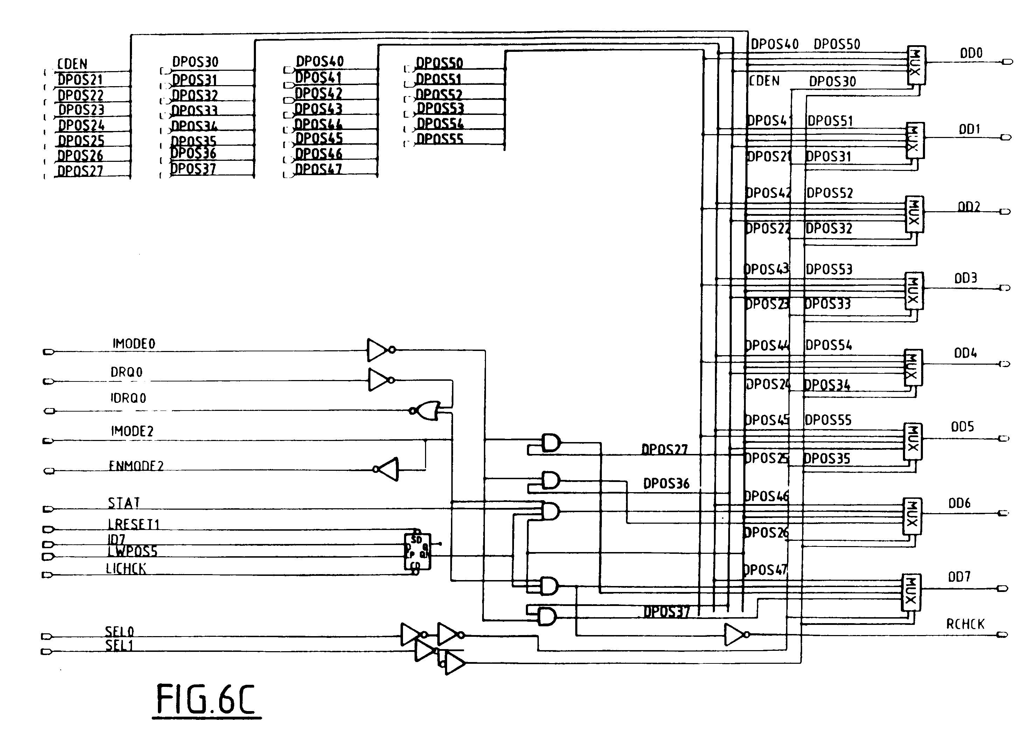

La figure 6C représente la logique de multiplexage permettant de sélectionner en lecture l'une ou l'autre des quatre voies constituées par les sorties DPOSXY de chacun des quatre registres dont chacun des bits significatifs est envoyé sur un multiplexeur à quatre entrées, et une sortie ODY, Y étant le numéro de bits correspondant.

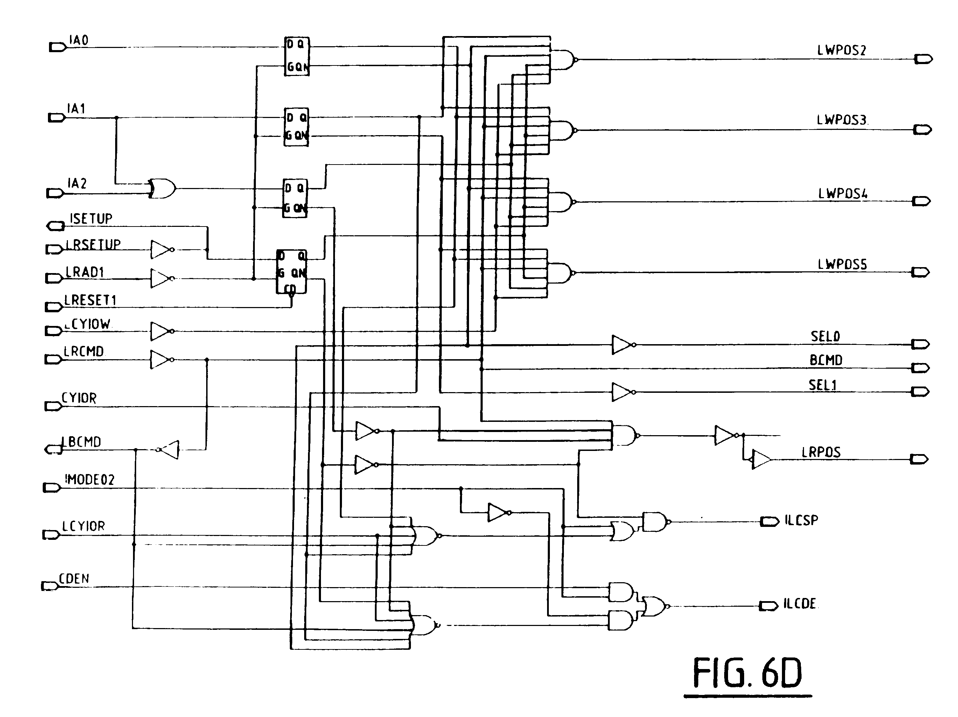

La figure 6D représente la logique générale des signaux de sélection des registres POS, et en particulier les signaux LWPOS2 à LWPOSS qui permettent de sélectionner ou d'initialiser les registres POS et les signaux SEL 0, SEL 1 qui commandent les multiplexeurs. Les différents signaux sont générés par décodage des adresses IA0 à IA2 du bus d'adresses MCA et des signaux LRSETVP, LRADL, LRESET 1, LCYIOW, LCYIOR, CYIOR et MODE 02.

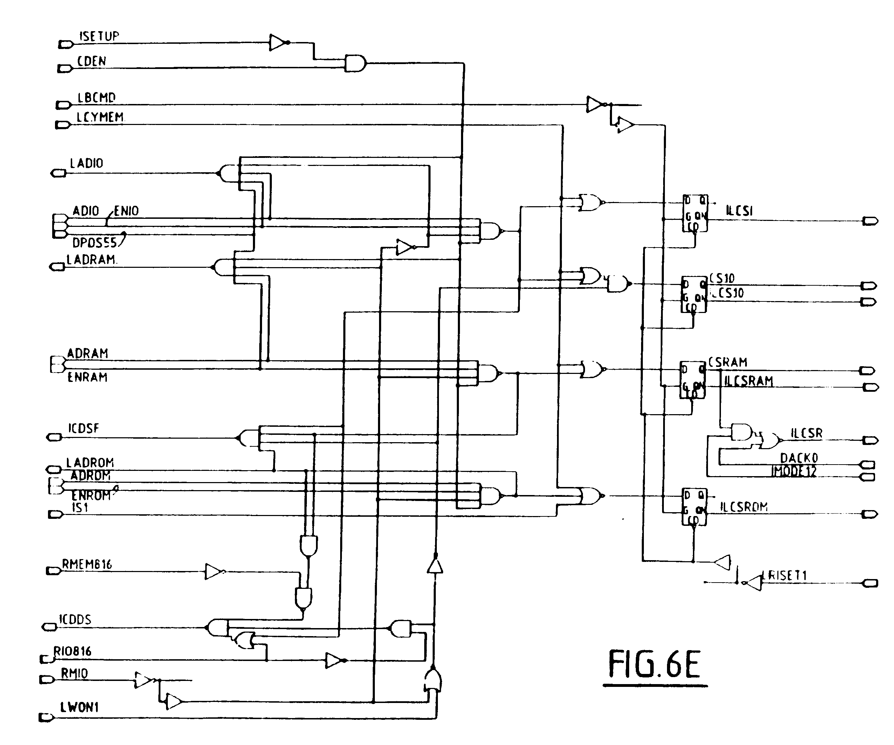

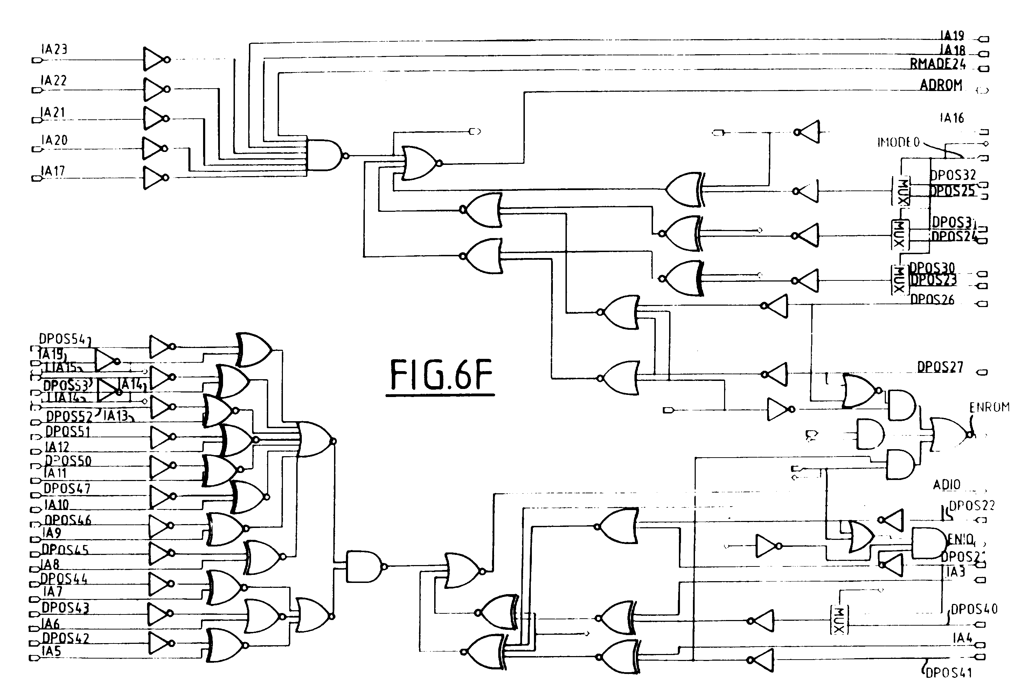

Les figures 6E et 6F représentent les schémas logiques des circuits qui permettent d'effectuer la sélection, des entrées-sorties par le signal CSIO, de la mémoire vive RAM par le signal CSRAM, et de la mémoire morte ROM par le signal LCSROM.
Ces signaux sont générés par exploitation des différents signaux MIO provenant du Bus MCA, et MEM816, I0816 provenant de la carte et indiquant la taille des bus, et à partir des signaux, par exemple pour les sélections des entrées-sorties, obtenus par la comparaison des adresses A3 à A15 avec les bits 1 à 7 du registre POS4 et 0 à 4 du registre POS5. De même, la comparaison des adresses A16 à A23 avec les bits 0 à 2 du registre POS3 formant le mot SEGROM dans le mode 0 ou avec les bits 3 à 5 du registre POS2 dans le mode 2 ainsi que les bits 6 et 7 du registre POS2 dans le mode 02 vont permettre de générer le signal de sélection de la mémoire morte ROM par le signal intermédiaire ADROM.

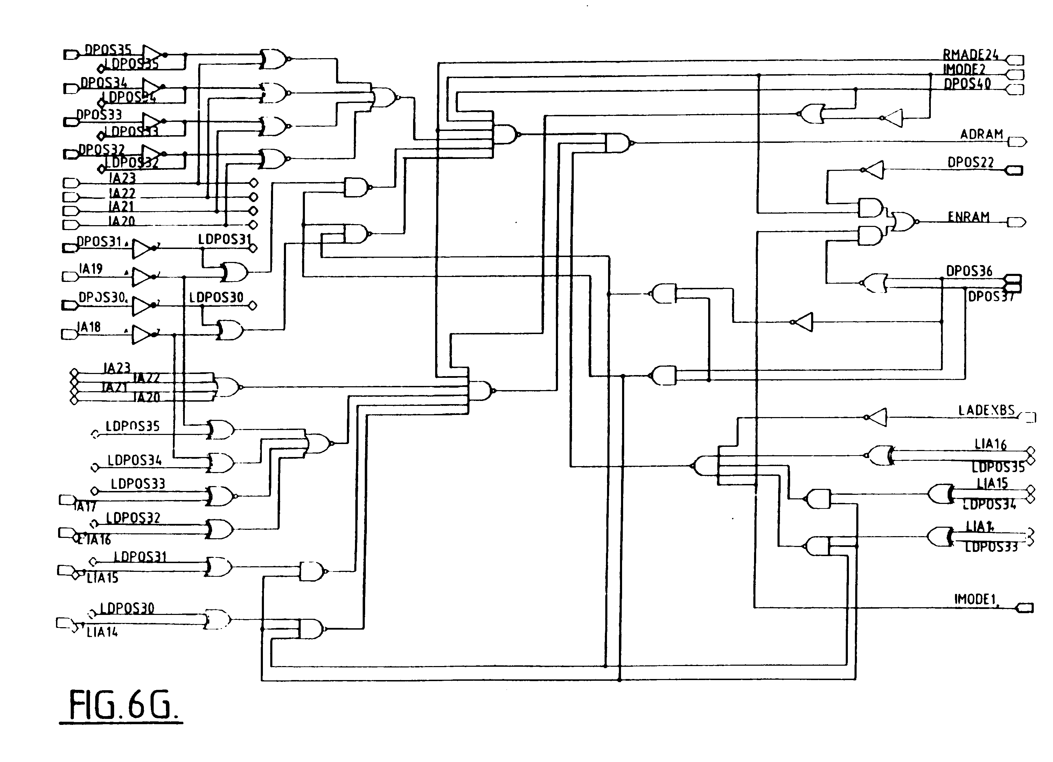

La figure 6G représente le schéma de la logique de sélection des circuits permettant de sélectionner la mémoire RAM. Cette logique élabore en mode 1 une comparaison sur les bits d'adresses de poids faible A14 à A16 fournis par le bus MCA avec les bits 3 à 5 du registre POS3 constituant l'information SEGRAM pour former un signal de validation d'adresses ADRAM. Un signal ENRAM de validation de la mémoire RAM est formé, soit par la combinaison des bits 6 et 7 du registre POS3 dans le cas d'un fonctionnement en mode 1, soit par le bit 2 du registre POS2 dans le cas d'un fonctionnement en mode 2 du circuit. Ces signaux permettent d'élaborer par addition le signal ENRAM. Le signal de validation d'adresses est également à élaborer en mode 2 en comparant les bits d'adresses A14 à A19 fournis par le bus d'adresses avec les bits 0 à 5 du registre POS3 ou en comparant les bits A18 à A23 fournis par le bus d'adresses avec les mêmes bits du registre POS3, cette comparaison se faisant selon la valeur du signal MADE24 indiquant l'extension des adresses à 16 Mégabit.

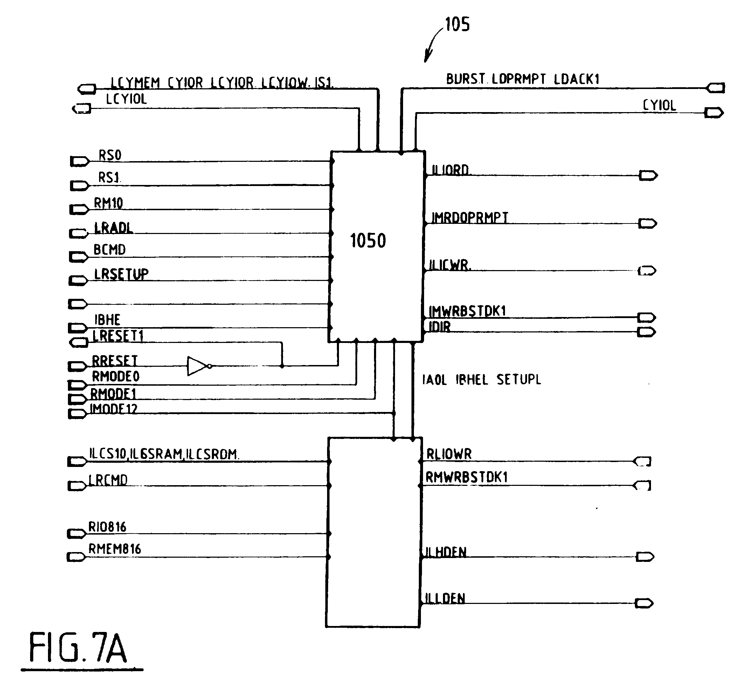

La figure 7A représente la décomposition du circuit logique de commande 105 en deux blocs logiques (1050, 1051). Un premier (1050) fournit les commandes des différents éléments qui peuvent être associés avec ce circuit arbitreur tels qu'une mémoire, des entrées-sorties ou des registres tampons. Ce circuit 105 comporte également un bloc logique (1051) BUF formant les signaux de sélection des tampons, qui peuvent être associés comme on le verra ultérieurement dans les applications, avec ce circuit arbitreur.

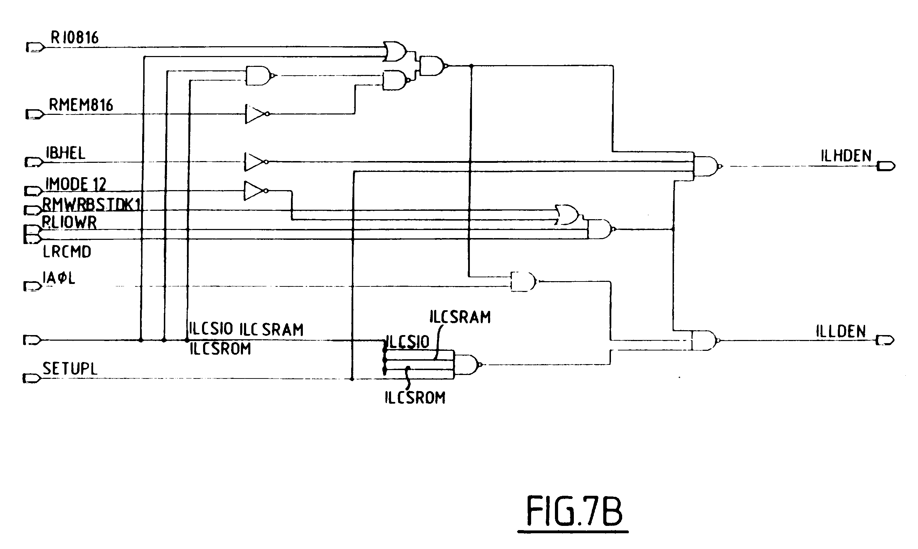

La figure 7B représente l'élaboration des signaux ILHDEN et ILLDEN à partir des signaux externes I0816 et MEM816 ainsi LIOWR, MWRBSIDK1, CS10, CSRAM, CSROM que d'un signal indicatif du fonctionnement en mode 1 ou 2 (mode 1,2).

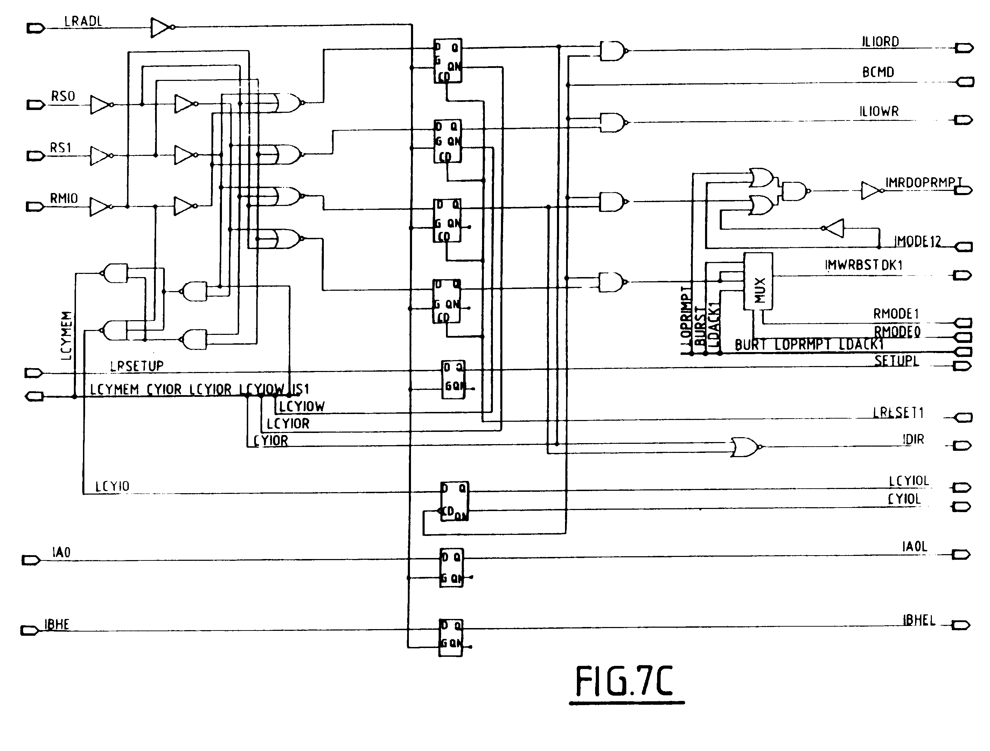

La figure 7C représente le schéma logique détaillé du bloc (1050) qui élabore les sorties MWIRBSTDK1 en fonction des modes utilisés et des signaux BURST OPRMPT et DACK1 et le signal MRDOPRMIT également en fonction des modes 1 ou 2 ou du mode 0 et 3. Ces circuits élaborent également des signaux internes à partir des entrées S0 à S1 indiquant le commencement d'un cycle, MIO indiquant si le cycle est un cycle mémoire ou d'entrée-sortie et LADL qui permet d'assurer le bon déroulement d'un cycle par le verrouillage du décodage d'adresses. Ces informations sont utilisées pour générer les signaux internes LCYMEM indicatifs d'un cycle mémoire, CYIOR indicatif d'un cycle de lecture d'entrée-sortie, LCYIOR, LCYIOW indicatif d'un cycle d'entrée-sortie d'écriture.

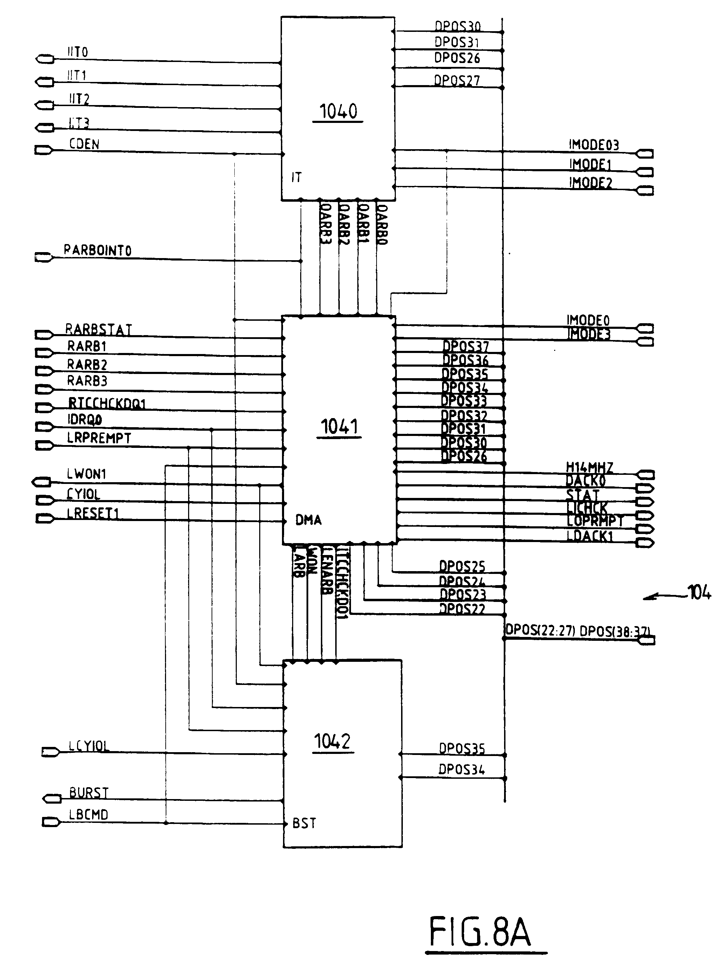

La figure 8A représente la décomposition du circuit logique d'arbitrage (104) en un bloc logique (1040) traitant les interruptions, un bloc logique (1041) mesurant l'arbitrage et un bloc logique (1042) générant le signal de rafale BURST.

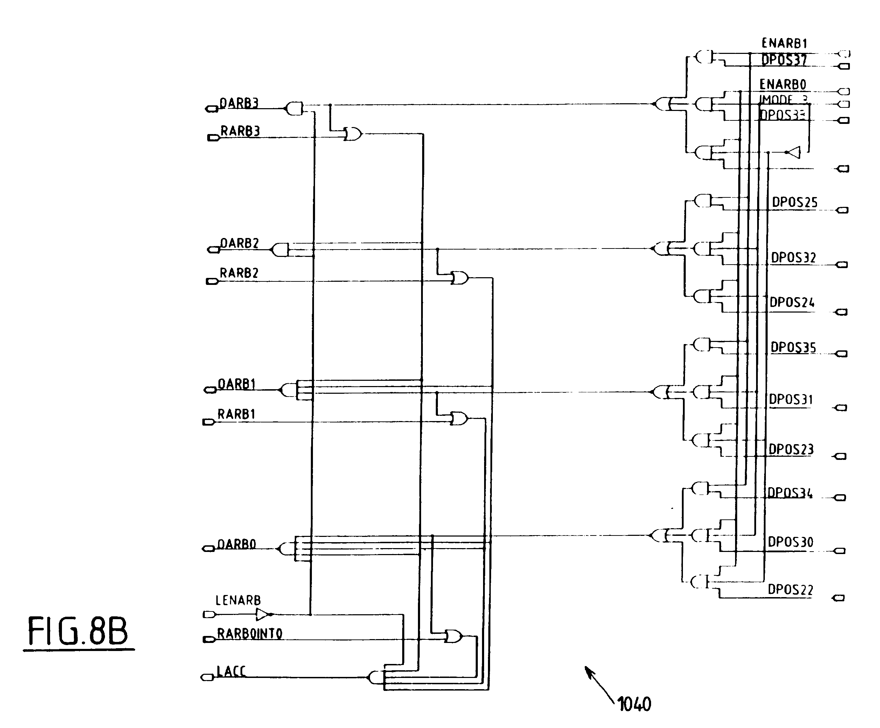

La figure 8B représente le schéma logique détaillé d'une partie du bloc logique 1041 élaborant à partir des signaux de niveau d'arbitrage RARB0 à RARB3 provenant du bus MCA et des bits 2 à 5 du registre POS2 en mode 0 ou des bits 0 à 3 ou 4 à 7 en mode 3 selon le canal d'arbitrage validé par le signal ENARB1 ou ENARB0, élabore les signaux OARB0 à OARB3.

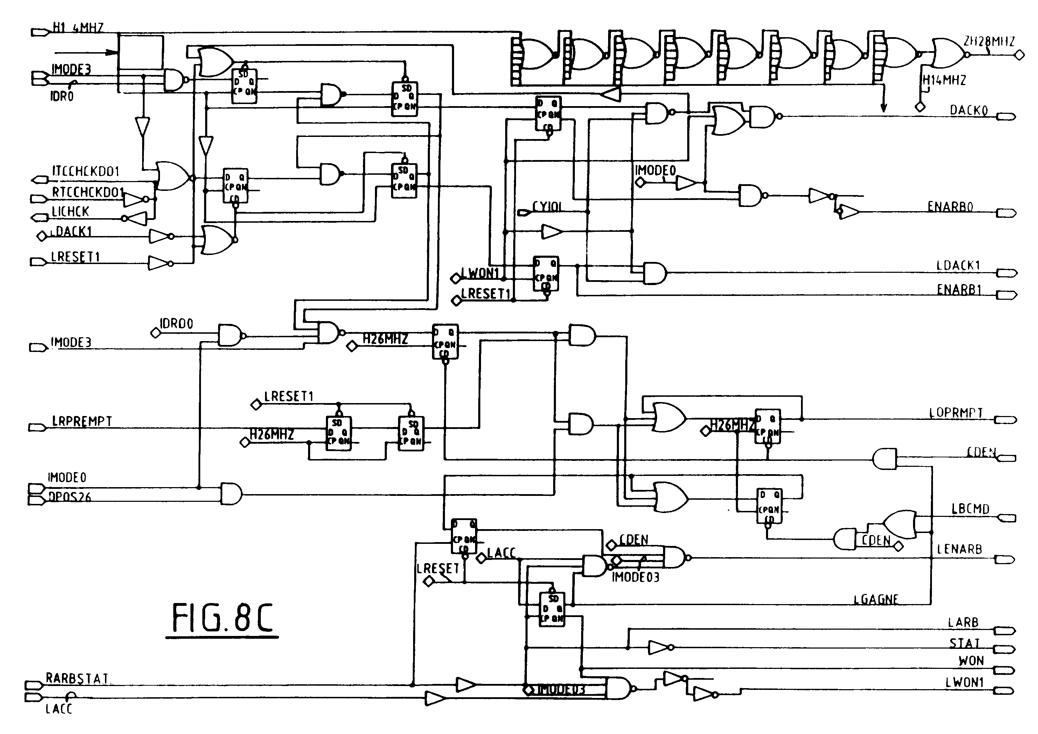

La figure 8C est le schéma logique détaillé de la partie du bloc logique 1041 qui permet d'élaborer les signaux ENARB0 à ENARB1 ainsi que les autres signaux d'arbitrage par utilisation des signaux de mode, des signaux d'acquittement LDACR1 et de requête sur bus LOPRMPT.

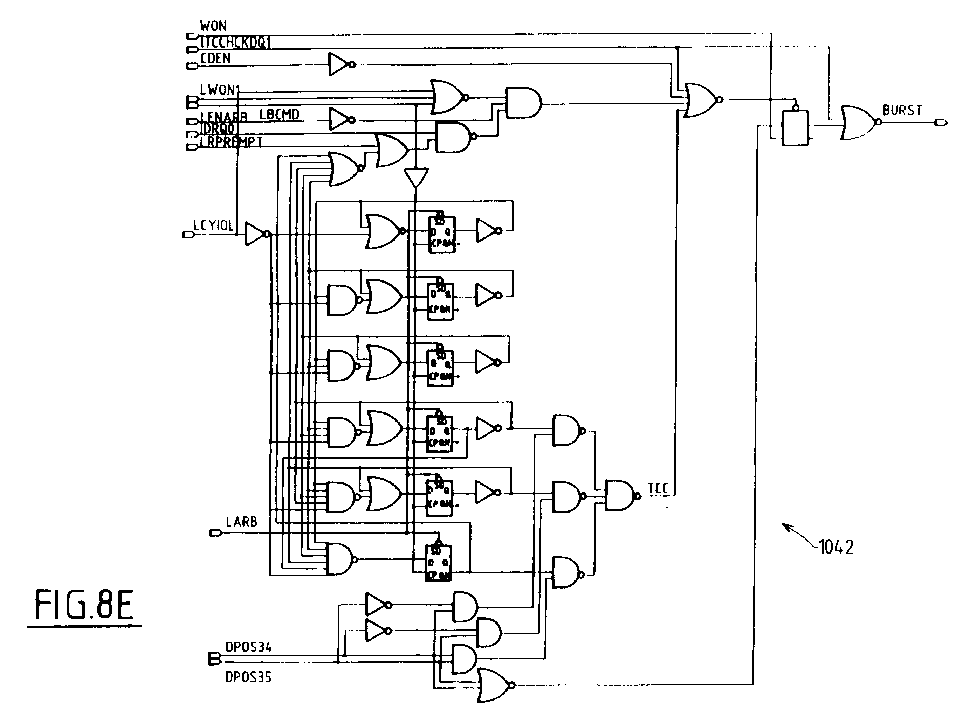

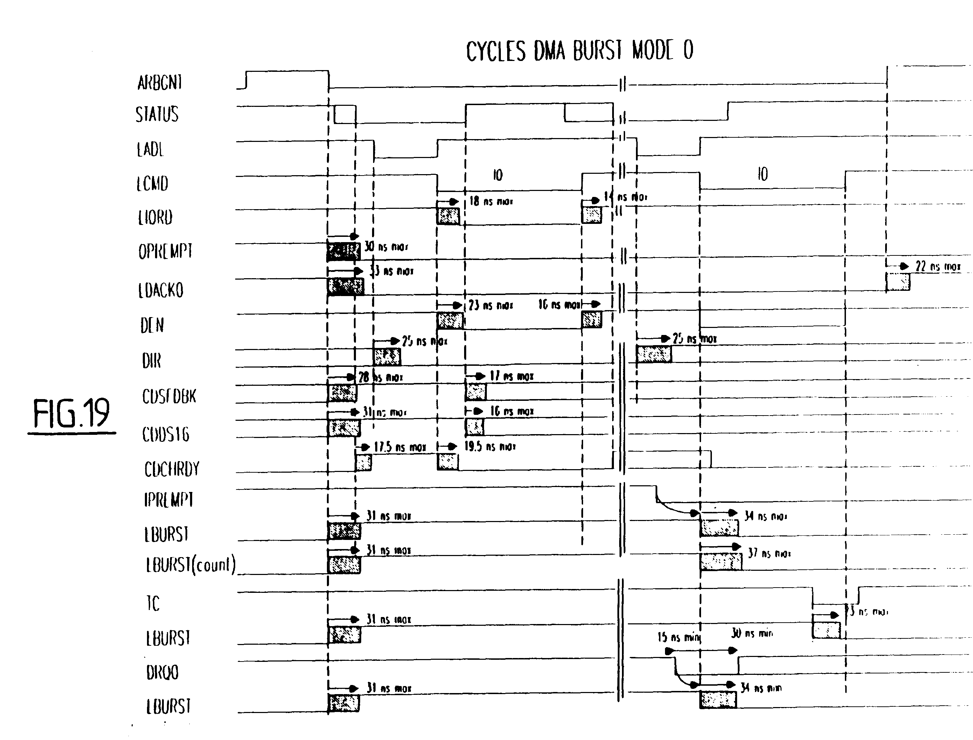

La figure 8E représente le schéma logique détaillé du bloc logique (1042) générant le signal de rafale (BURST). Ce signal est élaboré à partir des bits 4 et 5 du registre POS3 et à partir des signaux CDEN, LBCMD, LRPREMPT, LARB, ITCCMCKDD1, LWON1, LCYIOL, IDRQO de façon à satisfaire le cycle DMA avec rafale dans le mode 0 tel que représenté à la figure 19.

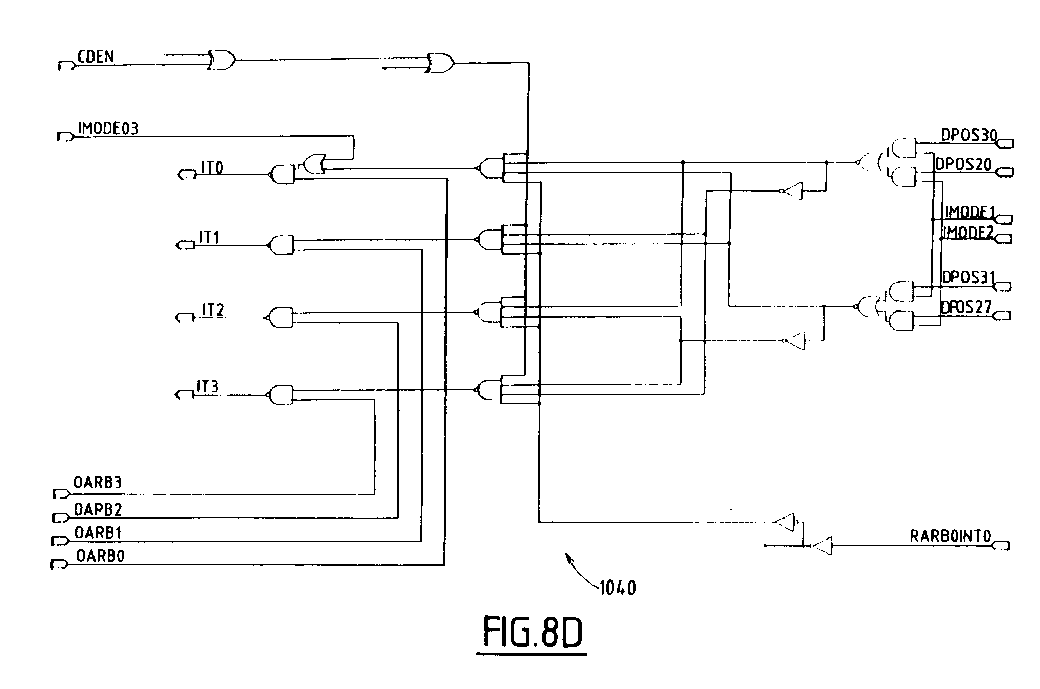

La figure 8D représente le schéma logique détaillé du bloc logique IT (1040) générant les niveaux d'interruption dans la procédure d'arbitrage en tenant compte d'une part des numéros d'arbitrage OARB0 à OARB3 fournis par le circuit d'arbitrage DMA, d'autre part des valeurs des bits 0 et 1 du registre POS3 en mode 1 constitué par l'information NIT et par les bits 6 et 7 du registre POS2 en mode 2.

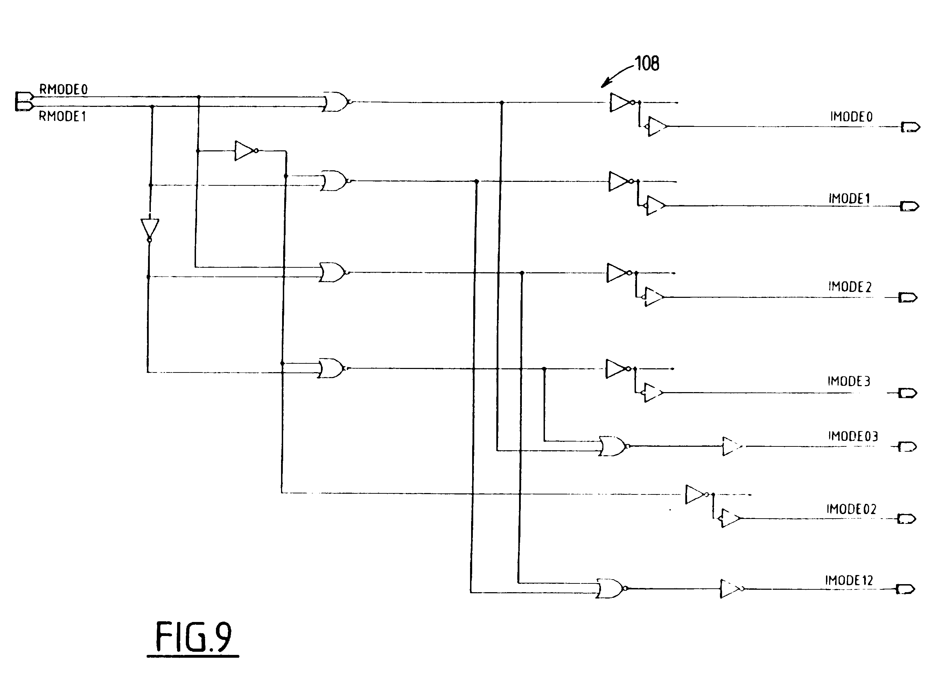

La figure 9 représente le schéma logique détaillé du circuit (108) de décodage du mode permettant à partir des signaux RMOD0 RMOD1 disponibles sur les broches d'entrée 3334 de décoder ces derniers sous forme de quatre signaux MODE 0, MODE 1, MODE 2, MODE 3 et de signaux complémentaires MODE 12, MODE 02, MODE 03 nécessaires à l'exploitation et à la sélection de certaines informations contenues dans les registres POS par les circuits décrits ci-dessus.

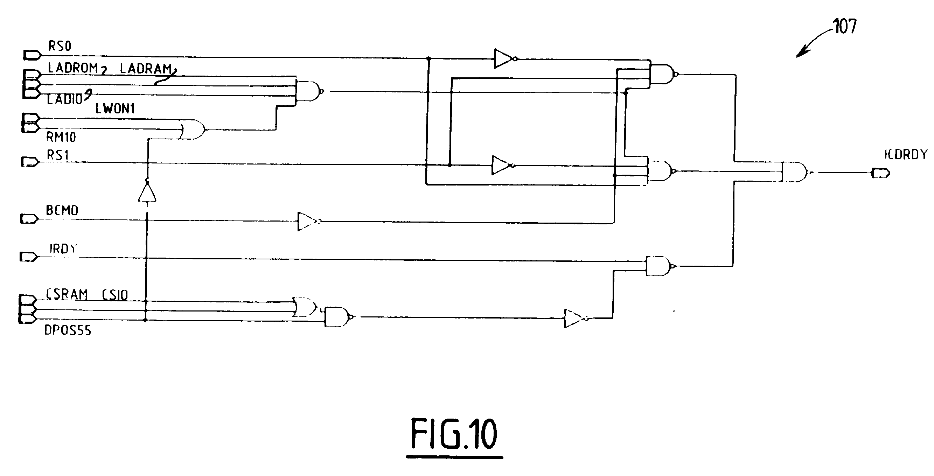

La figure 10 représente le schéma logique détaillé du circuit générant le signal prêt à partir de la réception du signal IRDY pour former le signal ICDRDY à destination du bus MCA, par utilisation des signaux d'indication d'un cycle mémoire LADROM, LADRAM ou d'un cycle d'entrée-sortie LADIO, ainsi que par utilisation des signaux de sélection de la mémoire vive ou des entrées-sorties respectivement CSRAM, CSIO et par utilisation du bit 5 du registre POS5 constituant l'information RDY. De même, ce circuit utilise les signaux RMIO et LWON1.

Ainsi, le circuit intégré représenté permet, lorsqu'il est installé sur une carte, d'effectuer en fonction des informations contenues dans les registres, quel que soit le mode de fonctionnement utilisé, les fonctions suivantes :
- initialisation des registres POS intégrés (112 à 115) ;
- contrôle des registres tampon de données (buffer) par les signaux DIR, LLDEN, LHDEN ;
- génération des commandes d'entrée-sortie en lecture ou en écriture à l'aide des signaux LIORD, LIOWR ;
- décodage d'un champ de mémoire morte ROM par génération du signal LCSROM, ce champ étant programmable en position et en taille dans l'espace mémoire ROM de l'extension BIOS défini par le registre POS (112) ;
- décodage d'un champ entrée-sortie (IO) par le signal LCSIO, ce champ étant programmable en position et en taille dans l'espace (IO) entrée-sortie défini dans les registres POS (112, 114, 115) ;
- gestion du signal canal PRET (CDCHRDY) pour l'obtention d'un cycle synchrone à 300ns ou asynchrone supérieur à 300ns avec l'entrée locale (RDY) ;
- génération du signal CDSFDBK ;
- génération du signal CDDS16 pour un champ de 16 bits ;
- entrées locales des signaux MEM816 et I0816, définissant la largeur du bus donnée mémoire ou entrée-sortie.

Pour les modes 0 et 2, ce circuit permet en outre la sélection des registres POS (110, 117) par l'envoi du signal (LCSPOS) et la génération du signal de validation de carte (LCDEN). Pour le mode 0, ce circuit met en oeuvre :
- la fonction de gestion d'un canal DMA en mode simple ou rafale avec autorisation d'un canal en définissant la taille des rafales et le niveau d'arbitrage programmable dans le registre (113) ;
- la génération du signal DACK après la participation à une phase d'arbitrage à la suite d'une requête DRQ.

En modes 1 et 2, ce circuit met en oeuvre les fonctions de génération de commande mémoire en fournissant les signaux (LMEMRD) et (LMEMWR), et la fonction de décodage d'un champ de mémoire vive RAM, en fournissant le signal (LCSRAM), ce champ étant programmable en position et en taille dans l'espace mémoire du système par les registres POS (112, 113, 114) en mode 2, et le registre POS (113) en mode 1.

Ce circuit fournit également la fonction multiplexage d'une ligne locale d'interruption parmi quatre niveaux d'interruptions définis par le registre POS (102) en mode 2 et par le registre POS (113) en mode 1. En outre, en mode 2, ce circuit fournit la fonction génération du signal (CHCK) et la gestion des bits 6 et 7 du registre POS (115) avec les entrées locales (ICHCK) et (STAT).

Ce circuit fournit en plus en mode 1 et en mode 3 la fonction sélection des registres d'identification externe par l'envoi des signaux (OEID0) et (OEID1).

Enfin, en mode 3, ce circuit rajoute aux fonctions des modes 1 et 3 et commune au quatre modes, une fonction de gestion de deux canaux DMA en mode simple avec arbitrage interne et niveau d'arbitrage programmable dans le registre POS (113) et une fonction de génération du signal (DACK0) ou (DACK1) après une phase d'arbitrage MCA suite à une requête (DRQ0) ou (DRQ1), le mode équité étant toujours actif.

On remarquera que ce circuit permet le contrôle de la génération des identificateurs nécessaires au fonctionnement avec un bus MCA par décodage des adresses POS (110) et POS (111) et commande d'accès aux registres dans les modes 1, 2, 3. En mode d'identificateur cablé pour une carte ne contenant pas de mémoire morte, type PROM, le circuit génère les signaux (OEID0) ou (OEID1) avec (LA0 à 0 ou 1) de façon à contrôler le tampon externe générant l'identificateur de la carte coupleur.

En mode 0, de façon non câblée, dans le cas où la carte coupleur comporte une mémoire morte qui fournit en local cet identificateur. Dans ce cas, le circuit génère une demande d'identificateur vers l'interface locale et ouvre le tampon de données du coupleur en envoyant le signal (CDPOS) avec (LAO-2 à 0 ou 1).

Ainsi, selon les modes de fonctionnement sélectionnés, ce circuit peut être utilisé dans différentes applications représentées aux figures 6 à 9.

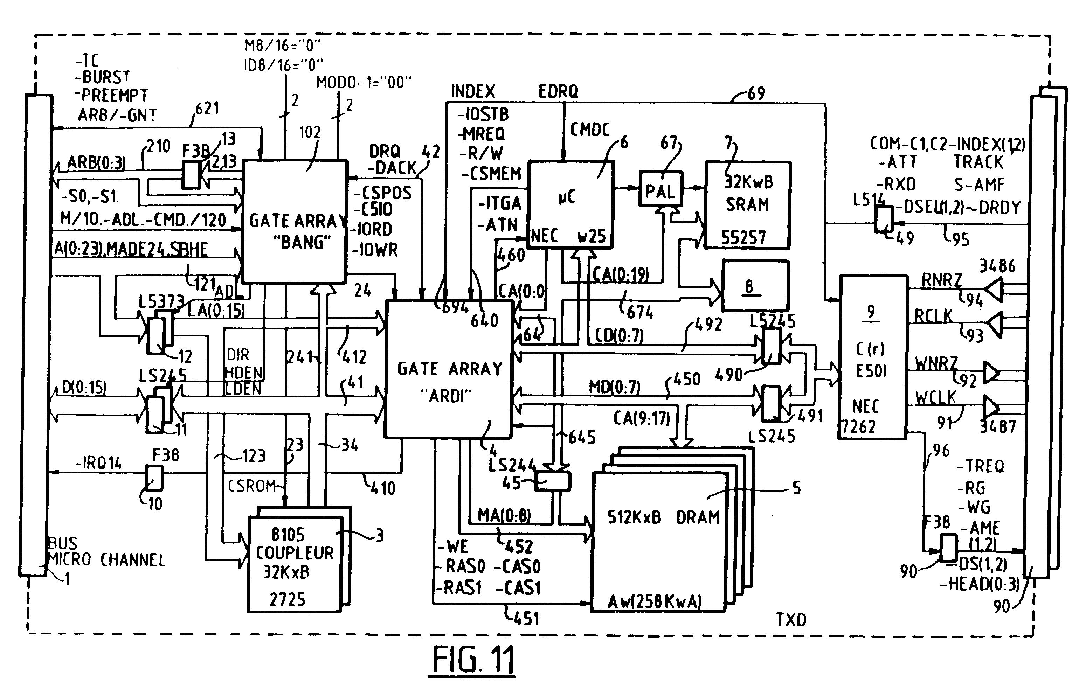

La figure 11 représente le schéma d'une carte d'interface intelligent contrôleur de disques. Cette carte est connectée sur un bus (1) du type MCA (Micro Channel Architecture) par l'intermédiaire d'un circuit intégré d'arbitrage du bus (102) réalisant l'interface entre le bus (1) et les circuits de la carte. Pour plus de détails sur ce circuit intégré (102), on se référera à la demande de brevet déposée par BULL S.A. intitulé "Circuit intégré arbitreur de bus MCA et utilisations d'un tel circuit".

Ce circuit (102) gère par le signal (CSROM) envoyé sur la ligne (623) les accès à une mémoire (3) du type EPROM qui contient la partie BIOS (système d'entrée/sortie de base) de l'interface disques. Un circuit coupleur (4) réalise matériellement l'interface d'entrée/sortie entre le processeur central et un circuit microprocesseur (6), ainsi que l'interface entre une mémoire CACHE (5) constituée de mémoires vives dynamiques et un circuit contrôleur de disque (9). Le circuit coupleur (4) est relié au circuit contrôleur de disque (9), du type tel que celui commercialisé par NEC sous la référence 7282, par deux bus de données séparés, l'un MD (0:7) (450) reliant le circuit coupleur (4) de la mémoire CACHE (5), l'autre CD (0:7) (492) reliant le contrôleur de disque d'une part au microprocesseur (6), d'autre part au circuit coupleur (4). Le circuit coupleur (4) reçoit les données provenant du bus MCA (1) par le bus (41) interfacé avec ce bus MCA (1) par des registres tampons (11) commandés par les signaux DIR, LDEN, HDEN provenant du circuit arbitreur (102).

Un bus (34) permet également de relier la mémoire EPROM (3) contenant le programme d'interface BIOS avec le bus (41).

Un bus (241) relie ce bus (41) au coupleur (2) d'interface pour bus MCA. Le circuit coupleur (4) reçoit également par un bus (412) les adresses LA(0:15) provenant à travers des circuits tampons (612) du bus d'adresse A (0:23) (121) qui relie le bus MCA (1) au circuit coupleur d'interface (102). Ces circuits tampons (612) sont commandés par le signal (ADL) du circuit arbitreur (102). Sur ce bus (121), transitent également les signaux (MA, OE24, SBHE). Un bus de contrôle (120) permet de recevoir du bus MCA (1) les signaux (S0, S1, M/IO, DL, CMD).

Le circuit d'interface coupleur (2) émet par le bus (213) interfacé par un registre tampon (13) et reçoit par le bus (210) les signaux ARB (0:3). Un bus de contrôle (21) reçoit et émet les signaux (TC, BURST, PREEMPT, ARB/-GNT). Le circuit d'interface (2) envoie par le bus de contrôle (24) les signaux (CSPOS, CSIO ; IORD, IOWR). Le circuit (2) reçoit ou émet par les lignes de contrôle (42) les signaux (DRQ, DACK). Le circuit coupleur (4) reçoit par la ligne (694) le signal index provenant du disque, et par les lignes (640), les signaux (IOSTB, MRQ, R/W, REFRQ), provenant du circuit microprocesseur (6). Le circuit microprocesseur (6) reçoit également les signaux (ITGA) et (ATN) en provenance du circuit coupleur (4) par les lignes (460). Ce microprocesseur (6) est relié par un bus d'adresse CA(0:19) (674), d'une part avec le circuit coupleur (4), d'autre part avec la mémoire statique (7), et enfin, avec la mémoire EPROM (8) qui contient le logiciel de fonctionnement de la carte. Le circuit coupleur (4) envoie par la liaison (451), les signaux de contrôle (WE, RAS0, RAS1, CAS0, CAS1).

Le contrôleur de disque (9) reçoit du connecteur de disque (90), par les lignes (95), les signaux (CMDC, ATN, SCT, DSEL, INDEX, XACK, STSD, DRDY). De même, ce circuit (9) reçoit par la ligne (94), le signal de donnée en lecture (RNRZ) ; par la ligne (93), le signal d'horloge lecture (RCLK) ; par la ligne (92), le signal de donnée en écriture (WNRZ) ; par la ligne (91), le signal d'horloge écriture (WCLK) ; et par la ligne (96), interfacée par le circuit (17), les signaux (XREQ, CMDD, RG, WG, AME, DS(0:2), ES(0:3)).

Dans cette application, le circuit arbitreur fonctionne en ModeO et les bus de données mémoire et d'entrée-sortie sont fixés à 8 bits par le fait que les entrées M8/16 et IO8/16 du circuit sont maintenues au niveau logique bas.

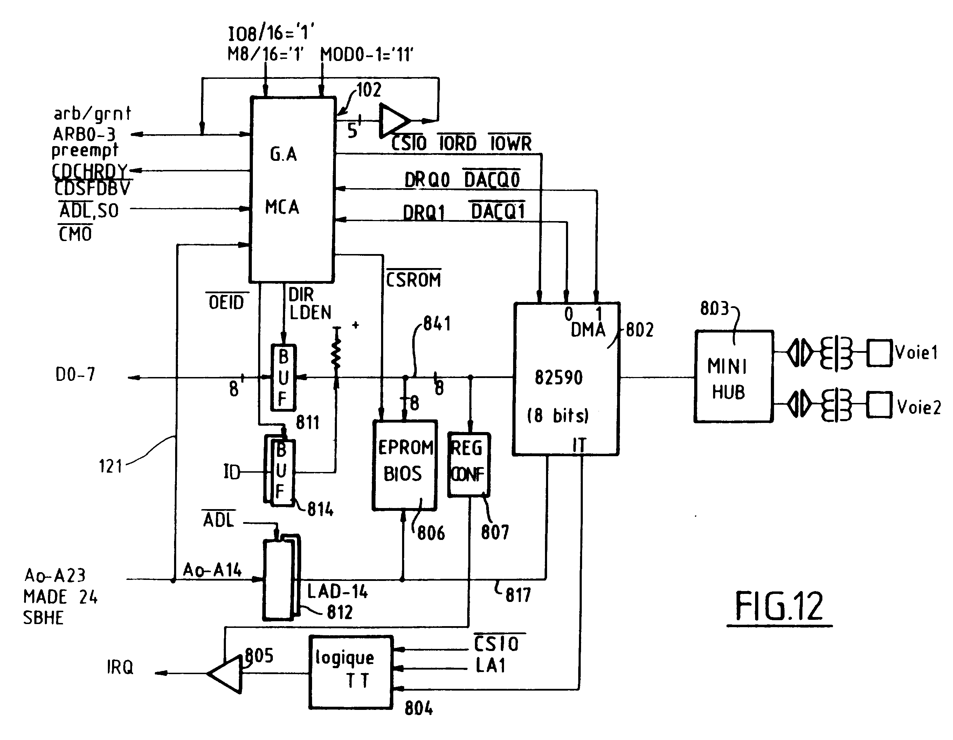

La figure 12 représente une troisième application du circuit d'arbitreur, dans lequel le circuit arbitreur (102) commande par les signaux (DIR, LDEN) un registre tampon (811) du bus de donnée à 8 bits (841) ; par les signaux (LOEID), les registres tampons (814) contenant l'identificateur de la carte, et par le signal (LADL), les registres verrouillés du bus d'adresse A0-A23 qui est transformé en un bus 14 bits (817). Ce circuit (102) est connecté en mode 3 et reçoit sur ses entrées (I0818) et (MEM818) les signaux lui permettant de fonctionner avec un bus d'entrée/sortie 8 bits et un bus mémoire 8 bits.

Le circuit (102) échange avec le bus MCA, les signaux (ARB GNT, ARB0-3, LPREEMPT, LCDCHRDY, CDSFDBK, LADL, S0, LCMD, MADE24, SBHE). Le circuit envoie le signal (LCSROM) sur une mémoire PROM (806) qui contient le BIOS et qui est connecté d'une part au bus de donnée (841) et d'autre part au bus d'adresse (817). Sur le bus de donnée (841) est également connecté un registre de configuration (807), Sur le bus de donnée et sur le bus d'adresse est également connecté un circuit d'interface de communication référencé 82 590 (802) relié à une interface physique du réseau (803) qui communique avec deux voies de Télécom. Le circuit (802) échange avec l'arbitreur les signaux (LCSIO,LIORD, LIOWR, DRQ0, DRQ1, LDACK0, LDACK1). Le circuit (802) envoie ses sorties d'interruption IT sur une logique (804) de multiplexage des interruptions qui reçoit également le signal (LCSIO) du circuit (102) et le signal (LA1) d'adresse par le registre (812). Cette logique d'interruption est branchée en sortie à une logique de multiplexage des interruptions (805) qui émet le signal (IRQ).

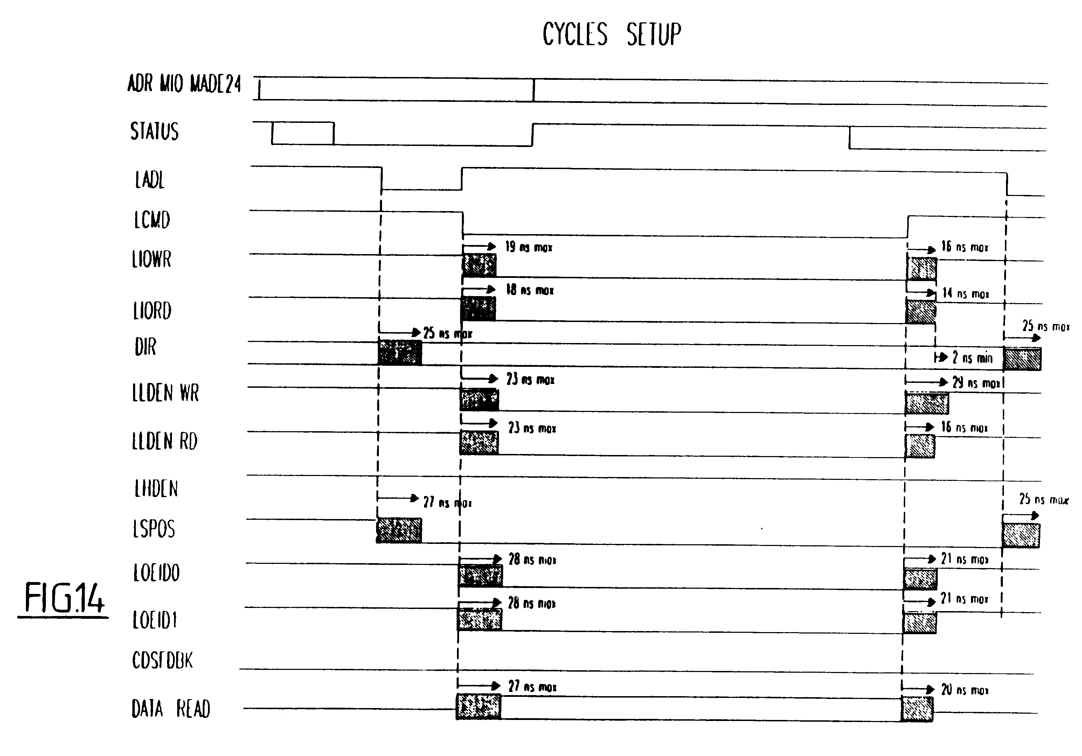

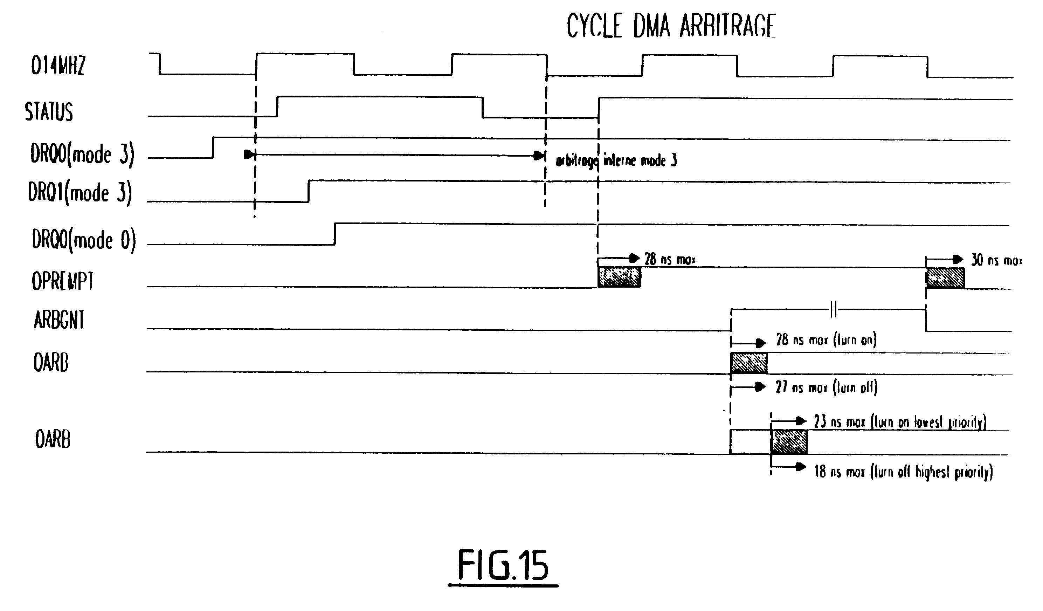

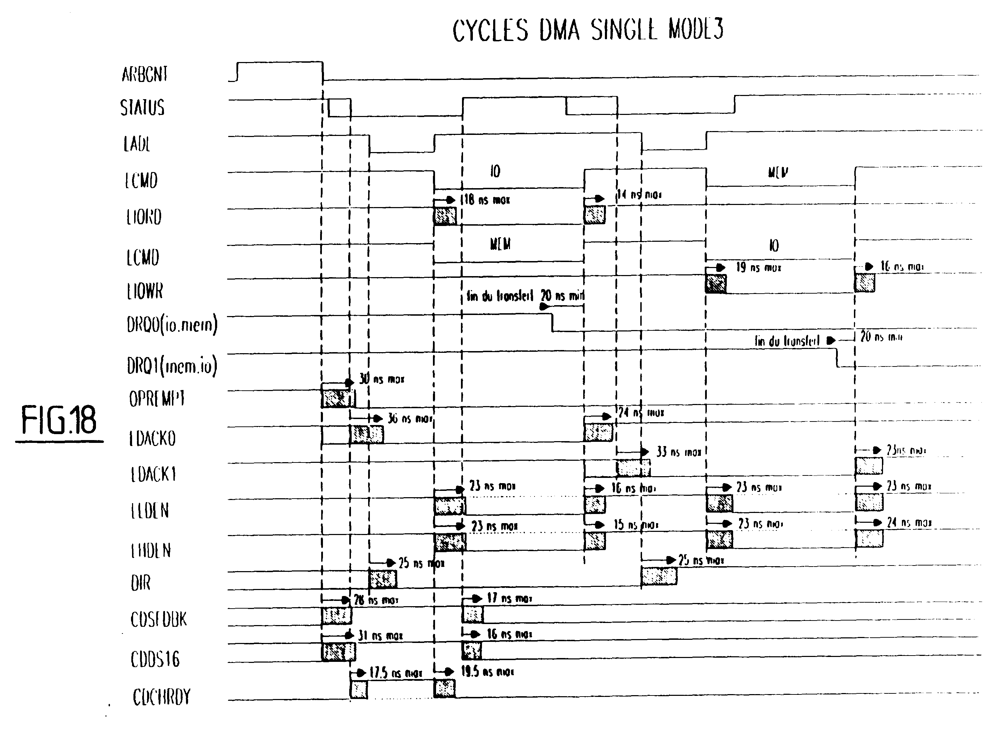

Le circuit, lorsqu'il est utilisé sur une carte du type de la figure 12, fonctionne pour son initialisation selon la séquence représentée à la figure 14, et pour un cycle d'accès mémoire, après avoir effectué un cycle d'arbitrage DMA avec le bus MCA correspondant à la figure 15, il effectue un échange DMA dans le mode simple selon le cycle représenté à la figure 18.

Enfin, le circuit, lorsqu'il est utilisé dans une carte du type de la figure 11, fonctionne selon le mode DMA Rafale dans la séquence représentée à la figure 19.

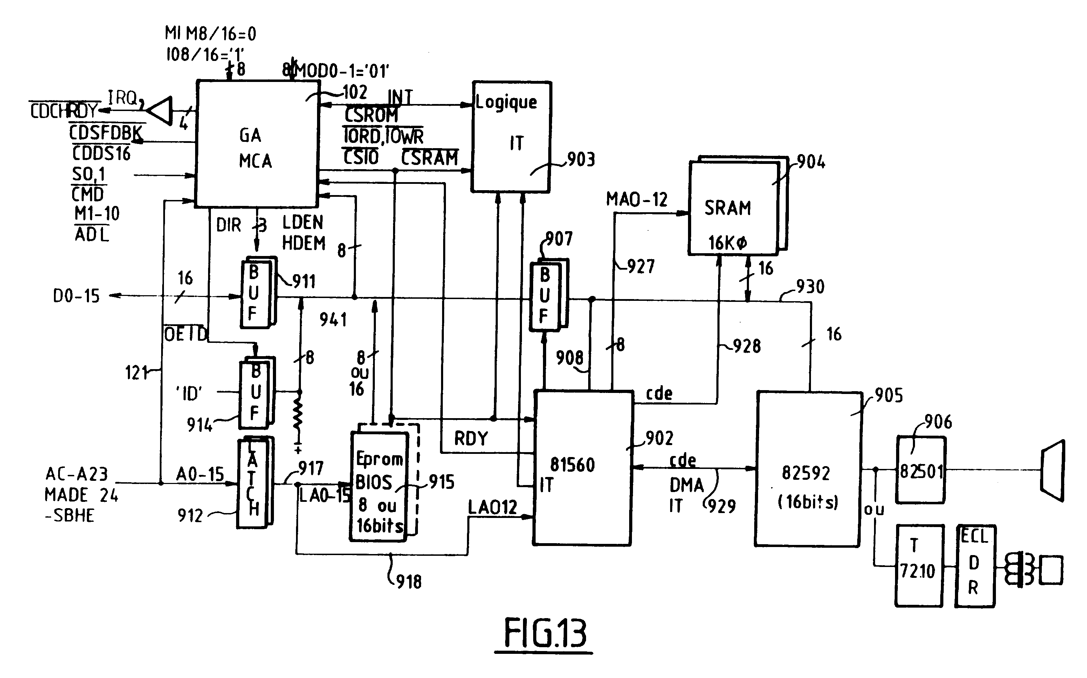

La figure 13 représente une autre utilisation du circuit arbitreur (102) dans lequel les signaux (DIR, LDEN, HDEN) commandent les registres tampons (911) du bus de donnée 16 bits pour le transformer en un bus 8 bits (941). De même, le signal (LOEID) commande les registres (914) contenant l'élément identifieur de la carte émis sur 8 bits vers le bus (941). Enfin, le signal (LADL) commande les registres verrouillés (912) qui transforment le bus d'adresse de 24 bits en bus d'adresse 16 bits (917). Ce bus d'adresse est envoyé sur une EPROM (915) contenant le BIOS local. Cette EPROM est connectée par un bus 8 ou 16 bits au bus (941). Le bus d'adresse (917) envoie ses 13 premières lignes vers un circuit de gestion de mémoire "Intel 82 560". Ce circuit (902) reçoit les signaux (LCSROM, LIORD, LIOWR, LCSIO, LCSRAM), signaux qui sont également envoyés à destination de l'EPROM et d'une logique d'interruption (903). Cette logique d'interruption échange avec le circuit (102) le signal (INT).

Le circuit (902) émet le signal (RDY) à destination de l'arbitreur (102). Ce circuit (902) commande un buffer (907) qui permet de transformer le bus (941) à 8 lignes de données en un bus à 16 lignes (930). Ce circuit (902) fournit un bus d'adresse de 12 bits (927) à destination d'un ensemble de mémoires vives statiques (904) connectées sur le bus de donné 16 bits (930). De même, ce circuit (902) envoie les signaux de commande (928) nécessaires à la commande de la mémoire vive statique. Enfin, ce circuit (902) échange les signaux de commande DMA et d'interruption par un bus (929) avec un circuit de gestion d'interface 82 592 (905), qui est lui-même relié en sortie à un circuit d'interface physique 82 501 (906).

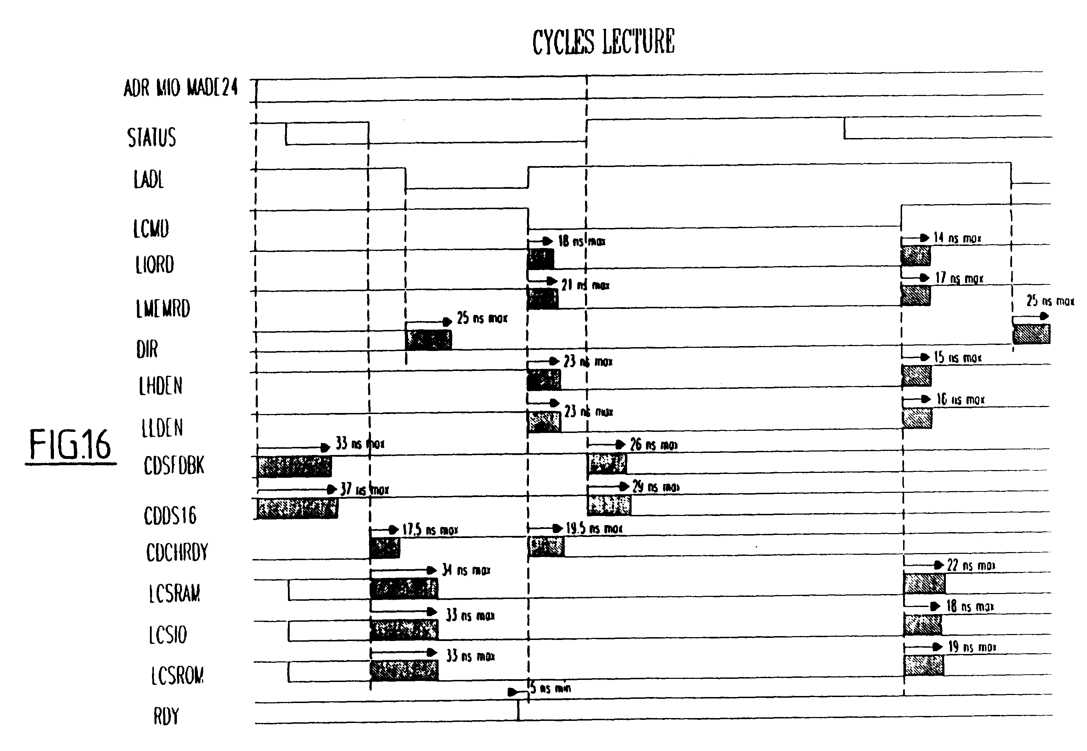

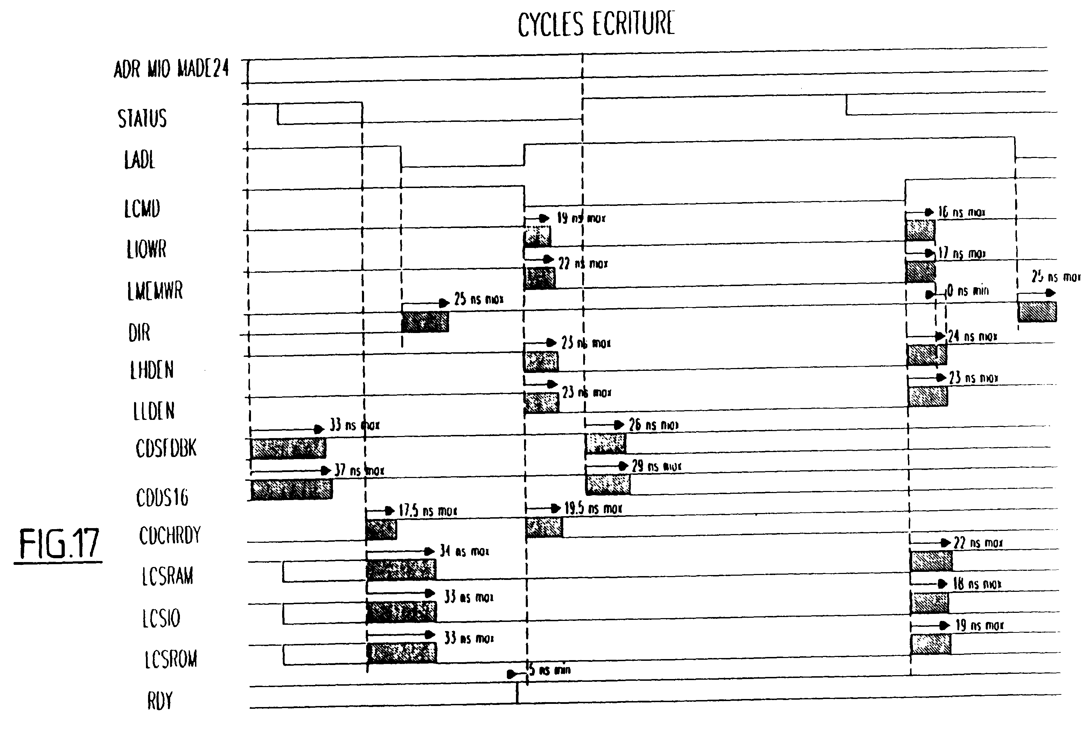

Le circuit, lorsqu'il est utilisé sur une carte du type des figures 12 ou 13, fonctionne pour sa mise en route selon le cycle de séquences représentées à la figure 14, et pour un cycle de lecture ou un cycle d'écriture mémoire selon les séquences représentées respectivement aux figures 16 et 17.

D'autres modifications à la portée de l'homme de métier font également partie de l'étendue de l'invention définie par les revendications.

## Revendications

1. Circuit intégré arbitreur de bus comprenant un circuit logique d'arbitrage de bus (104), un circuit logique de commande (105) couplé audit circuit de logique d'arbitrage de bus (104) pour délivrer des signaux de commande pour des circuits susceptibles d'être associés à ce circuit arbitreur de bus, un circuit de décodage (106) ayant une pluralité de registres de sélection d'options programmables (112-115), et un circuit logique de décodage du mode de fonctionnement (108) décodant un signal reçu pour déterminer un mode de fonctionnement du circuit d'arbitrage de bus parmi une pluralité de modes de fonctionnement caractérisé en ce que ledit circuit de décodage (108) du mode de fonctionnement étant couplé audit circuit d'arbitrage de bus (104), audit circuit logique de commande (105) et audit circuit de décodage (106), le circuit de décodage du mode fonctionnement (108) commande en fonction du mode de fonctionnement sélectionné le fonctionnement dudit circuit logique d'arbitrage de bus (104), dudit circuit logique de commande (105) et dudit circuit de décodage (106), pour interpréter le contenu de la dite pluralité de registres de sélection d'options programmables et modifier l'affectation des broches de connexion du circuit arbitreur de bus et leur utilisation par ledit circuit d'arbitrage de bus (104), ledit circuit logique de commande (105) et ledit circuit de décodage (106).

2. Circuit selon la revendication 1, caractérisé en ce que deux de la dite pluralité des registres de sélection d'options programmables définissent une première adresse (mode 8) du champ d'entrée-sortie du coupleur de fonctionnement (mode 0, 1 et 3) une seconde adresse (mode 6) du champ d'entrée-sortie du coupleur dans un second mode prédéterminé de fonctionnement (mode 2).

3. Circuit selon la revendication 1 ou 2, caractérisé en ce qu'un troisième registre définit dans le cas du mode 0, 1 et 3, une taille d'un segment d'extension d'un système d'entrée-sortie, et le numéro du segment de mémoire morte du système d'entrée-sortie ;
Une taille du champ d'entrée-sortie du coupleur ;
Le numéro de segments de mémoire morte ROM ;
Un signal de validation de la mémoire vive RAM ;
Un signal de validation des entrées-sorties ;
Un signal de validation de la carte.

4. Circuit selon l'une des revendications 1 à 3, caractérisé en ce dans le mode de fonctionnement 0, un des registres de la pluralité des registres de sélection d'options programmables définit la taille des rafales d'un mode d'accès direct mémoire ;
Un signal de validation de l'arbitrage local ;
Un signal d'activation du mode équité et un niveau de priorité du mode d'accès direct mémoire.

5. Circuit selon la revendication 2 ou 3, caractérisé en ce que dans le mode de fonctionnement 2, un registre de la pluralité des registres de sélection d'options programmables définit une taille de la fenêtre mémoire, une adresse d'un champ mémoire.

6. Circuit selon la revendication 2 ou 3, caractérisé en ce que le mode de fonctionnement 1 un registre de la pluralité des registres de sélection d'options programmables définit la taille de la fenêtre de mémoire vive RAM :
- un numéro du segment RAM en mode fenêtre ;
- une sélection d'une interruption parmi quatre.

7. Circuit selon la revendication 2 ou 3, caractérisé en ce que dans le mode de fonctionnement 3, un registre de la pluralité des registres de sélection d'options programmables définit un premier niveau de priorité du mode d'accès direct mémoire et, un second niveau de priorité du mode d'accès direct mémoire.

8. Circuit selon une des revendications 1, 2, 3, 4, 7 caractérisé en ce qu'il fournit dans les modes de fonctionnement 0 et 3, par le circuit de commande (105) un signal (LPREEMPT) de demande d'initialisation d'un canal de bus par une procédure d'arbitrage, par le circuit d'arbitrage (104) un signal (ARBGNT) indiquant une procédure d'arbitrage en cours, par le circuit de décodage (106) un signal (DRQ0) indiquant une requête de canal DMA présentée par le circuit au bus des signaux (ARBO-3) définissant les niveaux de priorité d'arbitrage de bus, et un signal (DACK0) indiquant au bus MCA couplé audit circuit arbitreur de bus un cycle d'accès direct mémoire consécutif à une demande effectuée par le signal (DRQ0) de requête de canal (DMA).

9. Circuit selon une des revendications 1, 2, 3, 4, 7, caractérisé en ce que le circuit de décodage 106 des registres de sélection d'option programmable POS délivre dans les modes de fonctionnement 0 et 3, un signal (LCDEN) de validation d'une carte sur laquelle le circuit de codage est implanté, et un signal (LCSPOS) de sélection des registres POS.

10. Circuit selon une des revendications 1, 2, 3, 6, 7, caractérisé en ce que dans les modes de fonctionnements 1 et 3, le circuit de décodage (106) des registres de sélection d'option programmable POS délivrent des signaux (OEID0 et OEID1), de validation des registres contenant l'identificateur d'une carte sur laquelle ledit circuit arbitreur est implanté.

11. Circuit selon une des revendications 1, 2, 3, 5, 6, caractérisé en ce qu'il fournit dans les modes de fonctionnement 1 et 2, par le circuit d'arbitrage (104) des signaux [IT(0-3)] de détermination du niveau d'interruption, par le circuit de commande (105) un signal (LMEMRD) de commande de lecture de mémoire, un signal (LMEMWR) de commande d'écriture de mémoire, et par le circuit de décodage (106) un signal (LCSRAM) de sélection de la mémoire vive RAM.

12. Circuit selon une des revendications 1, 3, 5, caractérisé en ce qu'il fournit dans le mode de fonctionnement 2, par le circuit de décodage (106) un signal (CHCK) d'indication en sortie de l'apparition d'une erreur grave, par le signal d'arbitrage (104) un signal (ICHCK) d'indication en entrée de l'apparition d'une erreur grave, un signal (INT) d'indication de l'apparition d'une interruption, un signal WS(0-1) d'indication de la taille de la mémoire vive utilisée en association avec le circuit arbitreur sur une carte, et un signal (STAT) d'indication de la présence d'un status erreur.

13. Circuit selon une des revendications 1 à 4, caractérisé en ce qu'il délivre en fonctionnement en mode 0 un signal (TC) d'interruption d'un échange DMA en rafale par le circuit d'arbitrage de bus (104), et un signal (BURST) d'échange DMA en rafale par le circuit de commande (105),.

14. Circuit selon une des revendications 1 à 3, 8, 9, 11, caractérisé en ce qu'il délivre dans le fonctionnement en mode 3 un signal (DRQ1) indiquant une requête de canal DMA présentée par le circuit d'arbitrage (104) au bus, un signal (DACK1) par le circuit de commande (105) indiquant au bus MCA couplé au circuit arbitreur de bus un cycle d'accès direct mémoire consécutif a une demande effectuée par le signal (DRQ1) de requête de canal DMA.

15. Utilisation du circuit, selon une des revendications 2 ou 3, ou 8, dans une carte LAN comportant un circuit d'interface (802) connecté, d'une part pour les signaux de contrôle avec le circuit arbitreur (102), et d'autre part à un bus d'adresse formé des 15 premières lignes d'un bus de 24 lignes, et des registres tampons (812) commandés par un signal (LADL) de verrouillage de décodage d'adresse provenant du circuit arbitreur, et enfin à un bus de donnée 8 bits branché par un registre tampon (811) commandé par des signaux (DIR),d'indication du sens de transfert (LDEN) et de validation de données de poids faible, et une mémoire EPROM (806) branché entre le bus de données 8 bits (841) et le bus d'adresse (817) et sélectionnée par le signal LCSROM.

16. Utilisation du circuit, selon une des revendications 2 ou 3, ou 8, dans une carte LAN comportant un circuit d'interface (802) connecté, d'une part pour les signaux de contrôle avec le circuit arbitreur (102), et d'autre part à un bus d'adresse formé des 15 premières lignes d'un bus de 24 lignes, et des registres tampons (812) commandés par un signal (LADL) de verrouillage de décodage d'adresse provenant du circuit arbitreur, et enfin à un bus de donnée 8 bits branché par un registre tampon (811) commandé par des signaux (DIR), d'indication du sens de transfert (LDEN) et de validation de données de poids faible, et une mémoire EPROM (806) branché entre le bus de données 8 bits (841) et le bus d'adresse (817) et sélectionnée par le signal DIR, LDEN.

## Patentansprüche

1. Integrierte Buszuteilungsschaltung, mit einer Buszuteilung-Logikschaltung (104), einer Steuerlogikschaltung (105), die mit der Buszuteilung-Logikschaltung (104) gekoppelt ist, um Steuersignale für Schaltungen zu liefern, die mit dieser Buszuteilungsschaltung verbunden werden können, einer Decodierungsschaltung (106), die mehrere Register für die Wahl programmierbarer Optionen (112 bis 115) besitzt, und einer Betriebsmodusdecodierung-Logikschaltung (108), die ein empfangenes Signal decodiert, um aus mehreren Betriebsmodi der Buszuteilungsschaltung einen Betriebsmodus zu bestimmen, dadurch gekennzeichnet, daß die Betriebsmodus-Decodierschaltung (108), die mit der Buszuteilungsschaltung (104), mit der Steuerlogikschaltung (105) und mit der Decodierungsschaltung (106) gekoppelt ist, in Abhängigkeit vom gewählten Betriebsmodus den Betrieb der Buszuteilung-Logikschaltung (104), der Steuerlogikschaltung (105) und der Decodierungsschaltung (106) steuert, um den Inhalt der mehreren Register für die Wahl programmierbarer Optionen zu interpretieren und die Zuordnung der Anschlußstifte der Buszuteilungsschaltung sowie ihre Verwendung durch die Buszuteilungsschaltung (104), die Steuerlogikschaltung (105) und die Decodierungsschaltung (106) zu modifizieren.

2. Schaltung nach Anspruch 1, dadurch gekennzeichnet, daß zwei der mehreren Register für die Wahl programmierbarer Optionen eine erste Adresse (Modus 8) des Eingangs/Ausgangs-Feldes des Funktionskopplers (Modus 0, 1 und 3) und in einem zweiten vorgegebenen Betriebsmodus (Modus 2) eine zweite Adresse (Modus 6) des Eingangs/Ausgangs-Feldes des Kopplers definieren.

3. Schaltung nach Anspruch 1 oder 2, dadurch gekennzeichnet, daß ein drittes Register im Fall des Modus 0, 1 und 3 definiert: eine Größe eines Erweiterungssegments eines Eingangs/Ausgangs-Systems und die Nummer des Segments des Festwertspeichers des Eingangs/Ausgangs-Systems;
eine Größe des Eingangs/Ausgangs-Feldes des Kopplers;
die Nummer des Segments des Festwertspeichers ROM;
ein Validierungssignal des Schreib-Lese-Speichers RAM;
ein Validierungssignal der Eingänge/Ausgänge;
ein Validierungssignal der Karte.

4. Schaltung nach einem der Ansprüche 1 bis 3, dadurch gekennzeichnet, daß im Betriebsmodus 0 eines der Register der mehreren Register für die Wahl programmierbarer Optionen definiert: die Größe der Bursts eines Speicherdirektzugriffsmodus;
ein Validierungssignal für lokale Zuteilung;
ein Aktivierungssignal des geeigneten Modus und ein Prioritätsniveau des Speicherdirektzugriffsmodus.

5. Schaltung nach Anspruch 2 oder 3, dadurch gekennzeichnet, daß im Betriebsmodus 2 ein Register der mehreren Register für die Wahl programmierbarer Optionen eine Größe des Speicherfensters und eine Adresse eines Speicherfeldes definiert.

6. Schaltung nach Anspruch 2 oder 3, dadurch gekennzeichnet, daß im Betriebsmodus 1 ein Register der mehreren Register für die Wahl programmierbarer Optionen definiert: die Größe des Fensters des Schreib-Lese-Speichers RAM:
- eine RAM-Segmentnummer im Fenstermodus;
- eine Wahl einer von vier Unterbrechungen.

7. Schaltung nach Anspruch 2 oder 3, dadurch gekennzeichnet, daß im Betriebsmodus 3 ein Register der mehreren Register für die Wahl programmierbarer Optionen ein erstes Prioritätsniveau des Speicherdirektzugriffsmodus und ein zweites Prioritätsniveau des Speicherdirektzugriffsmodus definiert.

8. Schaltung nach einem der Ansprüche 1, 2, 3, 4, 7, dadurch gekennzeichnet, daß sie in den Betriebsmodi 0 und 3 liefert: durch die Steuerschaltung (105) ein Signal (LPREEMPT) zur Anforderung der Initialisierung eines Buskanals durch eine Zuteilungsprozedur, durch die Zuteilungsschaltung (104) ein Signal (ARBGNT), das eine momentan ablaufende Zuteilungsprozedur angibt, und durch die Decodierungsschaltung (106) ein Signal (DRQ0), das eine Kanalanforderung (DMA) angibt, die von der Schaltung in den Signalbus (ARB 0-3) eingegeben wird und die Prioritätsniveaus für die Buszuteilung definiert, sowie ein Signal (DACK0), das dem mit der Buszuteilungsschaltung gekoppelten MCA-Bus einen Speicherdirektzugriffszyklus nach einer vom Signal (DRQ0) zur Kanalanforderung (DMA) ausgeführten Anforderung anzeigt.

9. Schaltung nach einem der Ansprüche 1, 2, 3, 4, 7, dadurch gekennzeichnet, daß die Decodierungsschaltung (106) der POS-Register für die Wahl einer programmierbaren Option in den Betriebsmodi 0 und 3 ein Validierungssignal (LCDEN) für eine Karte, in der die Codierungsschaltung implantiert ist, sowie ein Signal (LCSPOS) zur Wahl der POS-Register liefert.

10. Schaltung nach einem der Ansprüche 1 , 2, 3, 6, 7, dadurch gekennzeichnet, daß die Decodierungsschaltung (106) der POS-Register für die Wahl einer programmierbaren Option in den Betriebsmodi 1 und 3 Signale (OEID0 und OEID1) zur Validierung von Registern liefert, die den Identifizierer einer Karte enthalten, in der die Zuteilungsschaltung implantiert ist.

11. Schaltung nach einem der Ansprüche 1, 2, 3, 5, 6, dadurch gekennzeichnet, daß sie in den Betriebsmodi 1 und 2 liefert: durch die Zuteilungsschaltung (104) Signale [IT(0-3)] zur Bestimmung des Unterbrechungsniveaus, durch die Steuerschaltung (105) ein Speicherlesebefehlssignal (LMEMRD) und ein Speicherschreibbefehlssignal (LMEMWR) und durch die Decodierungsschaltung (106) ein Signal (LCSRAM) zur Wahl des Schreib-Lese-Speichers RAM.

12. Schaltung nach einem der Ansprüche 1, 3, 5, dadurch gekennzeichnet, daß sie im Betriebsmodus 2 liefert: durch die Decodierungsschaltung (106) ein Signal (CHCK), das am Ausgang das Auftreten eines schweren Fehlers angibt, und durch die Zuteilungsschaltung (104) ein Signal (ICHCK), das am Eingang das Auftreten eines schweren Fehlers angibt, ein Signal (INT), das das Auftreten einer Unterbrechung angibt, ein Signal WS(0-1), das die Größe des in Verbindung mit der Zuteilungsschaltung auf einer Karte verwendeten Schreib-Lese-Speichers angibt, sowie ein Signal (STAT), das das Vorliegen eines Fehlerstatus angibt.

13. Schaltung nach einem der Ansprüche 1 bis 4, dadurch gekennzeichnet, daß sie im Betriebsmodus 0 liefert: durch die Buszuteilungsschaltung (104) ein Signal (TC) zur Unterbrechung eines DMA-Burst-Austausches sowie durch die Steuerschaltung (105) ein Signal (BURST) für einen DMA-Burst-Austausch.

14. Schaltung nach einem der Ansprüche 1 bis 3, 8, 9, 11, dadurch gekennzeichnet, daß sie im Betriebsmodus 3 liefert: ein Signal (DRQ 1), das eine DMA-Kanalanforderung, die von der Zuteilungsschaltung (104) in den Bus eingegeben wird, und durch die Steuerschaltung (105) ein Signal (DACK1), das dem mit der Buszuteilungsschaltung gekoppelten MCA-Bus einen Speicherdirektzugriffszyklus nach einer vom Signal (DRQ1) für die Kanalanforderung DMA ausgeführten Anforderung angibt.

15. Verwendung der Schaltung nach einem der Ansprüche 2 oder 3 oder 8 in einer LAN-Karte, die eine Schnittstellenkarte (802), die einerseits für die Steuersignale mit der Zuteilungsschaltung (102) und andererseits mit einem aus 15 ersten Leitungen eines Busses mit 24 Leitungen gebildeten Adressenbus verbunden ist, Pufferregister (812), die durch ein Adressendecodierung-Sperrsignal (LADL) von der Zuteilungsschaltung gesteuert werden, wobei die Schnittstellenschaltung (802) schließlich mit einem 8-Bit-Datenbus verbunden ist, der über ein Pufferregister (811) angeschlossen ist, der durch Signale (DIR) für die Angabe der Übertragungsrichtung (LDEN) und der Validierung der niedrigstwertigen Daten gesteuert wird, sowie einen EPROM-Speicher (806) enthält, der zwischen den 8-Bit-Datenbus (841) und den Adressenbus (817) geschaltet ist und durch das Signal LCSROM gewählt wird.

16. Verwendung der Schaltung nach einem der Ansprüche 2 oder 3 oder 8 in einer LAN-Karte, die eine Schnittstellenschaltung (802), die einerseits für die Steuersignale mit dem Zuteilungsbus (102) und andererseits mit einem aus den 15 ersten Leitungen eines Busses mit 24 Leitungen gebildeten Adressenbus verbunden ist, Pufferregister (812), die durch ein Adressendecodierung-Sperrsignal (LADL) von der Zuteilungsschaltung gesteuert werden, wobei die Schnittstellenschaltung schließlich mit einem 8-Bit-Datenbus verbunden ist, der über ein Pufferregister (812) angeschlossen ist, das durch die Signale (DIR) zur Angabe der Übertragungsrichtung (LDEN) und der Validierung der niedrigstwertigen Daten gesteuert wird, sowie einen EPROM-Speicher (806) enthält, der zwischen den 8-Bit-Datenbus (841) und den Adressenbus (817) geschaltet ist und durch das Signal DIR, LDEN gewählt wird.

## Claims

1. Bus arbitrator integrated circuit comprising a bus arbitration logic circuit (104), a logic control circuit (105) coupled to said bus arbitration logic circuit (104) in order to supply control signals for circuits liable to be associated with this bus arbitrator circuit, a decoding circuit (106) having a plurality of programmable option-selection registers (112-5), and a logic circuit for decoding the operating mode (108) decoding a received signal in order to determine one operating mode for the bus arbitration circuit from among a plurality of operating modes characterised in that, said circuit (108) for decoding the operating mode being coupled to said bus arbitration circuit (104), to said logic control circuit (105) and to said decoding circuit (106), the circuit for decoding the operating mode (108) controls, as a function of the selected operating mode, the operation of said bus arbitration logic circuit (104), of said logical control circuit (105) and of said decoding circuit (106), in order to interpret the content of said plurality of programmable option-selection registers and modify the allocation of the connection terminals of the bus arbitrator circuit and their use by said bus arbitration circuit (104), said logic control circuit (105) and said decoding circuit (106).

2. Circuit according to Claim 1, characterised in that two out of said plurality of programmable option-selection registers define a first address (mode 8) of the input-output field of the operation coupler (mode 0, 1 and 3) a second address (mode 6) of the input-output field in a second predetermined operating mode (mode 2).

3. Circuit according to Claim 1 or 2, characterised in that, in the case of mode 0, 1 and 3, a third register defines a size of extension segment for an input-output system, and the number of the read-only memory segment of the input-output system;
a size for the input-output field of the coupler;
the number of segments of ROM read-only memory;
a validation signal for the RAM random access memory;
a validation signal for the inputs-outputs;
a validation signal for the board.

4. Circuit according to one of Claims 1 to 3, characterised in that, in the operation mode 0, one of the registers from the plurality of programmable option-selection registers defines the size of the bursts of a direct memory-access mode;
a validation signal for the local arbitration;
an activation signal for the equity mode and a priority level for the direct memory-access mode.

5. Circuit according to Claim 2 or 3, characterised in that, in the operation mode 2, one register from the plurality of the programmable option-selection registers defines a size of the memory window, an address of a memory field.

6. Circuit according to Claim 2 or 3, characterised in that the operation mode 1 one register from the plurality of programmable option-selection registers defines the size of the RAM random access memory window:
- a number of the RAM segment in window mode;
- a selection of one interrupt from among four.

7. Circuit according to Claim 2 or 3, characterised in that, in the operation mode 3 one register from the plurality of programmable option-selection registers defines a first priority level of the direct memory-access mode and a second priority level of the direct memory-access mode.

8. Circuit according to one of Claims 1, 2, 3, 4, 7, characterised in that, in the operation modes 0 and 3, it supplies via the control circuit (105) a signal (LPREEMPT) requesting the initialisation of a bus channel by an arbitration procedure, via the arbitration circuit (104) a signal (ARBGNT) indicating a current arbitration procedure, via the decoding circuit (106) a signal (DRQ0) indicating a DMA channel request made by the circuit to the signal bus (ARBO-3) defining the bus arbitration priority levels, and a signal (DACK0) indicating to the MCA bus coupled to said bus arbitrator circuit a direct memory-access cycle following on from a request made by the signal (DRQO) requesting a channel (DMA).

9. Circuit according to Claims 1, 2, 3, 4, 7, characterised in that, in the operation modes 0 and 3, the decoding circuit 106 of the POS programmable option-selection registers supplies a validation signal (LCDEN) for a board on which the coding circuit is located, and a signal (LCSPOS) for selecting the POS registers.

10. Circuit according to one of Claims 1, 2, 3, 6, 7, characterised in that, in the operation modes 1 and 3, the decoding circuit (106) of the POS programmable option-selection registers supply signals (OEID0 and OEID1) for validating the registers containing the identifier of a board on which said arbitrator circuit is located.

11. Circuit according to one of Claims 1, 2, 3, 5, 6, characterised in that, in the operation modes 1 and 2, it supplies via the arbitration circuit (104) signals ([IT(0-3)] for determining the interruption level, via the control circuit (105) a control signal (LMEMRD) for memory reading, a control signal (LMEMWR) for memory writing and, via the decoding circuit (106), a signal (LCSRAM) for selecting the RAM random access memory.

12. Circuit according to one of Claims 1, 3, 5, characterised in that, in the operation mode 2, it supplies via the decoding circuit (106) a signal (CHCK) indicating as an output the appearance of a serious error, by the arbitration signal (104) a signal (ICHCK) indicating as an input the appearance of a serious error, a signal (INT) indicating the appearance of an interrupt, a signal WS(0-1) indicating the size of the random access memory used in association with the arbitration circuit on a board, and a signal (STAT) indicating the presence of an error status.

13. Circuit according to one of Claims 1 to 4, characterised in that, when operating in mode 0, it supplies an interrupt signal (TC) for a DMA burst exchange by the bus arbitration circuit (104), and a signal (BURST) for a DMA burst exchange by the control circuit (105).

14. Circuit according to one of Claims 1 to 3, 8, 9, 11, characterised in that, when operating in mode 3, it supplies a signal (DRQ1) indicating a DMA channel request made by the arbitration circuit (104) to the bus, a signal (DACK1) by the control circuit (105) indicating to the MCA bus, coupled to the bus arbitrator circuit, a direct memory-access cycle following on from a request made by the signal (DRQ1) requesting a DMA channel.

15. Use of the circuit, according to one of Claims 2 or 3, or 8, in a LAN board comprising an interface circuit (802) connected on the one hand, for the control signals, to the arbitrator circuit (102), and on the other hand to an address bus formed of the first 15 lines of a 24-line bus, and buffer registers (812) controlled by an address decoding locking signal (LADL) emanating from the arbitrator circuit, and finally to an 8-bit data bus connected via a buffer register (811) controlled by signals (DIR), for indicating the transfer direction (LDEN) and for validating low-order data, and an EPROM memory (806) connected between the 8-bit data bus (841) and the address bus (817) and selected by the signal LCSROM.

16. Use of the circuit according to one of Claims 2 or 3, or 8, in a LAN board comprising an interface circuit (802) connected on the one hand, for the control signals, to the arbitrator circuit (102), and on the other hand to an address bus formed of the first 15 lines of a 24-line bus, and buffer registers (812) controlled by an address decoding locking signal (LADL) emanating from the arbitrator circuit, and finally to an 8-bit data bus connected via a buffer register (811) controlled by signals (DIR), for indicating the transfer direction (LDEN) and for validating low-order data, and an EPROM memory (806) connected between the 8-bit data bus (841) and the address bus (817) and selected by the signal DIR, LDEN.
